# EUROPEAN PATENT SPECIFICATION

(11) **EP 4 448 226 B1**
(45) Date of publication and mention of the grant of the patent: **26.11.2025**
(21) Application number: 23809768.7
(22) Date of filing: 20.10.2023
(51) Int. Cl.: B25J 9/00, B65G 47/14, B25J 9/16

(54) **SYSTEMS AND METHODS FOR OBJECT ORIENTATION AND MANIPULATION VIA MACHINE LEARNING BASED CONTROL**
SYSTEME UND VERFAHREN ZUR OBJEKTAUSRICHTUNG UND -MANIPULATION ÜBER MASCHINENLERNBASIERTE STEUERUNG
SYSTÈMES ET PROCÉDÉS D'ORIENTATION ET DE MANIPULATION D'OBJET PAR L'INTERMÉDIAIRE D'UNE COMMANDE BASÉE SUR L'APPRENTISSAGE AUTOMATIQUE

(30) Priority: 07.02.2023 US 202318165641
(43) Date of publication of application: 23.10.2024
(73) Proprietor: MITSUBISHI ELECTRIC CORPORATION, Chiyoda-ku Tokyo 100-8310 (JP)
(72) Inventor: YERAZUNIS, William, Cambridge, Massachussetts 02139-1955 (US); KONG, Chuizheng, Cambridge, Massachussetts 02139-1955 (US); NIKOVSKI, Daniel, Cambridge, Massachussetts 02139-1955 (US)
(74) Representative: Pfenning, Meinig & Partner mbB
(86) International application number: PCT/JP2023/038802
(87) International publication number: WO 2024/166454

(56) References cited:
- EP-A2- 0 916 457
- EP-A2- 3 412 414

## Description

### [Technical Field]

The present disclosure relates to robotic systems, controllers, and methods for controlling manipulation of objects, and more particularly to systems and methods for object orientation and manipulation by machine learning based control.

### [Background Art]

Document EP 0 916 457 A2 relates to a flexible parts feeder including a flexible membrane for supporting parts and defining a selection zone where the positional state of parts is analyzed by a machine vision system. The output of the sensor is used to control a transformer that selectively applies impulse energy to the flexible membrane so as to change the positional states of at least some parts in the selection zone to a desired positional state. Those parts having the desired positional state are selected and removed from the membrane by a robot.

Various industrial activities such as product assembly and packaging involve manipulation of objects by robotic assemblies of different types. One or more robots usually grasp and hold objects while carrying out an assembly operation or while moving such objects between two points in the assembly line. Also in many non-contact based sub-processes, it may be desired that an object be placed on a surface or conveyor in a particular pose, for example to avoid collision with other objects or entities. Given the fact that objects may come in different shapes, sizes, and may be of different rigidities, each of them may have a specific handling requirement. In view of such handling requirements, the robots manipulating such objects are required to approach the objects from a limited number of sides, angles, and surfaces.

Furthermore, specific to some processes, the objects may be required to be oriented in one or more particular orientations for successful execution of such processes. For example, during automated product assembly tasks, it is necessary to properly orient incoming parts or sub-assemblies of parts so that a robot can grasp the part in an installable orientation. Available solutions are based on hard automation and are mostly single-part orientation systems. For example, vibratory bowl feeders are not usable for any part other than the part the vibratory bowl feeder is designed for. Such conventional approaches lack meaningful, fast, and flexible schemes and measures to orient objects in any desired pose. Any attempt to make such systems flexible requires reconfiguring the hard automation, which is a time consuming, labor intensive and infeasible. Accordingly, it is desired to have systems, methods and controllers that can help orient objects, components, and parts in any desired manner. Such a need becomes imminent in industrial processes since objects, components, and parts can be highly varied in shape, and market desires are moving more and more towards mass customization. Therefore, there is a need to move away from hard automation and single-part orientation systems to more flexible and generalized part orientation systems.

### [Summary of Invention]

The invention is defined in the independent claims. It relates to a robotic assembly and a method for controlling the robotic assembly as defined in the independent claims. Advantageous embodiments can be found in the dependent claims

Example embodiments described herein are directed towards machine control with particular emphasis on controlling operations of robots. It is an object of some embodiments to provide control policies for orienting randomly positioned objects into any desired pose. Automated object orientation using available techniques requires knowledge of contact and impulse dynamics of the candidate object. Some example embodiments are based on the realization that the contact and impulse dynamics of the irregular part are infeasible to model with traditional physical methods. Some example embodiments are also based on the realization that specific to each desired orientation, a robot attempting to orient an object in a desired orientation would require a custom program to grasp and flip or invert the object to the desired orientation. As the robot can, at best, only approach the object in a direction contained in the hemisphere above the platform on which the object is supported, it is not feasible to define a custom program for each desired orientation.

Some example embodiments are directed towards providing maneuvering schemes that help a robot in orienting an object in a desired orientation without increasing the takt time significantly. It is also an object of some example embodiments to provide an improved design of a robotic assembly for object orientation using an array of actuators controlled using commands that increase the likelihood of changing a current orientation of an object to the desired orientation without taking into consideration the contact and impulse dynamics of the object. Some example embodiments use an array of actuators to impart an impulse on a surface that the objects are lying on, with the objective of flipping them on a different face/side.

Some example embodiments also aim to provide machine learning based control schemes to control object manipulators. Some example embodiments provide self-supervised learning based approaches to generate control policies for orienting objects into desired poses. The object's current state defined by a location and orientation of the object is taken as an input by a machine learning system powered by a learned function and the machine learning system outputs a selection of the actuator(s) to be fired and the impulse duration(s) that has/have the best probability to put the object into a desired pose. The desired pose may be for example a pose that is acceptable for robot grasping. Some example embodiments use learned probabilistic models that directly yield likely outcomes as a function of the current state of an object and applied control commands to actuators, and use those models to choose the optimal control commands.

It is a realization of some example embodiments that one approach to learning manipulation is to learn a full state-space model of the system dynamics, using various system identification methods. Although this approach is very productive for linear systems, some example embodiments recognize that the complicated non-linear nature of contact dynamics requires the application of advanced methods for learning non-linear and possibly hybrid discrete/continuous dynamical models. Various universal function approximation methods including neural networks may be used to learn system dynamics. Recent interest in model-based reinforcement learning has renewed research efforts to find good methods for learning world models. In this regard, Contact Nets have improved considerably the accuracy of predictive models with respect to earlier dynamical models based on standard neural networks. Some example embodiments are based on the realization that learning such models is quite complicated, and might also be an overkill for the control problem, where prediction of the entire future trajectory of the manipulated object is not really necessary, and predicting only the stable resting state is sufficient.

In this regard, some example embodiments are based on learning predictive models that predict only the resting state of the manipulated object as a result of a particular action (actuator fired). Similar to stochastic learning automata (SLA), these predictive models are probabilistic, to capture the inherent stochasticity of the complex contact dynamics involved. However, unlike SLA, example embodiments are based on models that use the full continuous state of the manipulated object, measured as precisely as technically and economically feasible, for the purposes of predicting the resting state. The underlying control problem possesses significant aleatoric (inherent) uncertainty (mostly due to chaotic bifurcation dynamics and contact phenomena), but not necessarily significant epistemic (observational) uncertainty, and there is no reason to artificially inject such epistemic uncertainty by quantizing the state; rather, a more productive approach is to measure the continuous state as accurately as possible, and then employ machine learning methods that can work with the full continuous state.

Some embodiments are directed towards providing closed loop controllers for executing such control policies for orienting randomly positioned objects into any desired pose. The closed loop controllers continuously process the input states indicative of poses of the object and the predicted commands causing change in orientation of the object, to reach the desired states indicative of the desired poses. In this regard, the closed loop controller obtains the input states from pose data detected by a suitable system and obtains the predicted commands from a machine learning system to command a set of actuators to apply impulse forces to the object to reach the desired states. Some example embodiments may utilize the closed loop controller to train the machine learning system from scratch or on the fly. In this way, example embodiments provide measures for deciding how to control the system in order to manipulate the objects in an optimal way to reach the desired state.

Some embodiments are directed towards providing robotic assemblies for orienting such randomly positioned objects into any desired pose. Some example embodiments provide a robotic assembly comprising a robot for manipulating the object and a closed loop controller for controlling the operations of the robot. The controller may also control a set of actuators to orient the object in a desired pose by providing optimal sets of control commands to the set of actuators. In this regard, the controller interfaces with an imaging system that provides pose data of the object a machine learning system that maps the pose data to a set of control commands causing the set of actuators to apply impulse forces to the object such that the forces change the orientation of the object to a desired or target orientation. The controller may command the robot to manipulate the object when the object is oriented in the desired orientation.

The desired orientation for the object may be predefined in a database or may be provided as an input to the system, for example by a user/operator or by other machines. In this way, example embodiments of this invention help improve the overall efficiency of robotic manipulation tasks by providing an added capability of orienting parts in a desired manner. Such an additional capability may be configured specific to each individual part being manipulated without the need of requiring individual machines or assemblies for each such part. For these reasons, example embodiments of this invention may be seamlessly integrated into existing systems such as production line assemblies and similar robots without requiring reconfiguration.

In order to achieve the aforementioned objectives and advantages, the invention provides a robotic assembly and a method for controlling the robotic assembly as defined in the independent claims.

The robotic assembly comprises a supporting surface configured to support an object and a set of actuators coupled with the supporting surface. Each actuator of the set of actuators is configured to apply an impulse to the supporting surface with energy governed by a corresponding control command of a set of control commands. The robotic assembly also comprises a memory configured to store a learned function trained with machine learning to map a location and an orientation of the object at the supporting surface to one or more commands of the set of control commands. The robotic assembly also comprises a processor communicatively coupled to the other components of the robotic assembly.

The processor accepts a plurality of instances of pose data of the object at the supporting surface. The plurality of instances of the pose data of the object are provided by an imaging system that detects a location and orientation of the object on the supporting surface at discrete time intervals. The processor obtains a first current location and a first current orientation of the object based on a first instance of the plurality of instances of the pose data of the object. The object may have a plurality of stable orientations and one or more of the plurality of stable orientations may include a target orientation of the object in which the object is desired to be oriented. The processor then executes the learned function stored in the memory to map the first current location and the first current orientation of the object to at least one control command of the set of control commands.

The processor further submits the at least one control command to the set of actuators to apply a corresponding specific distribution of energy at the first current location of the object at the supporting surface to increase a likelihood of changing the first current orientation to a target orientation of the object. The processor then obtains a second current orientation of the object based on a second instance of the plurality of instances of the pose data of the object and additionally commands a robotic manipulator to manipulate the supported object based on a match between the second orientation of the object and the target orientation.

Moreover, a method for robotic manipulation of an object supported at a supporting surface of the robot assembly is provided. The method comprises receiving a plurality of instances of pose data of the object at the supporting surface and obtaining a first current location and a first current orientation of the object based on a first instance of the plurality of instances of the pose data of the object. The method further comprises executing a learned function to map the first current location and the first current orientation of the object to at least one control command of a set of control commands. The learned function is trained with machine learning to map a location and an orientation of the object at the supporting surface to one or more commands of the set of control commands. The method further comprises submitting the at least one control command to a set of actuators to apply a corresponding specific distribution of energy at the first current location of the object at the supporting surface to increase a likelihood of changing the first current orientation to a target orientation of the object. Each actuator of the set of actuators is configured to apply an impulse to the supporting surface with energy governed by a corresponding control command of the set of control commands. The method further comprises obtaining a second current orientation of the object based on a second instance of the plurality of instances of the pose data of the object and commanding a robotic manipulator to manipulate the supported object based on a match between the second orientation of the object and the target orientation.

Some example embodiments provide a robotic controller for controlling a robotic assembly comprising a flexible bowl feeder supporting an object, a robotic arm for manipulating the supported object, and a set of actuators. The robotic controller is in communication with an impulse generator for controlling the set of actuators, an imaging system for generating a plurality of instances of pose data of the object, and the robotic arm. The robotic controller comprises an interface configured to communicate with a database of learned association between candidate orientations of the object to one or more control commands of a set of control commands yielding new orientations. The object may have a plurality of stable orientations and one or more of the plurality of stable orientations include a target orientation of the object. The interface is further configured to accept the target orientation of the object and accept the plurality of instances of pose data of the supported object.

The robotic controller also comprises a memory configured to store executable instructions and a processor configured to execute the executable instructions to obtain a current location and a first current orientation of the supported object based on a first instance of the plurality of instances of the pose data of the supported object. The processor is further configured to query the database with the first current orientation to obtain at least one control command of the set of control commands and submit the at least one control command to the pulse generator to cause the set of actuators to apply a corresponding specific distribution of energy at the current location of the supported object to increase a likelihood of changing the first current orientation to the target orientation of the object.

The processor is further configured to obtain a second current orientation of the object based on a second instance of the plurality of instances of the pose data of the supported object and command the robotic arm to manipulate the supported object based on a match between the second orientation of the object and the target orientation. The robotic controller may be implemented as one or more cloud based services whereby the imaging system uploads the plurality of instances of the pose data of the supported object and the impulse generator downloads the at least one control command.

Some example embodiments also provide systems and methods for training a function such as a classifier that is trained using one or a combination of k-nearest neighbors algorithm (k-NN), a support-vector machine (SVM), an rN (radius-neighborhood), a random forest, a relevance vector machine (RVM), a reinforcement learning (RL), or a backward propagation minimizing a loss function. The training may comprise collecting a target orientation of an object on a supporting surface and controlling the set of actuators using multiple sets of random control commands to apply different distributions of energy at different locations of the supporting surface. The training also comprises detecting, using an imaging system, an orientation change of the object for each of the different distributions of energy and training parameters of the function to produce the sets of control commands to the set of actuators increasing the likelihood of the different distributions of energy at the current location of the object to change a current orientation of the object to the target orientation.

Some beneficial aspects, among many beneficial aspects realized, is that embodiments of the present disclosure can continuously generate control commands for changing an orientation of an object without significantly increasing the wait time for the robotic manipulator. Such a capability leads to an improved robot capable of performing manipulation tasks without the need for separate sophisticated techniques for object manipulation. Such an improved robot also reduces the human intervention required in the process thereby leading to reduced handling times and handling errors.

Some features of the embodiments of the present disclosure as described herein may be used in the automotive industry, aerospace industry, nonlinear control systems, and process engineering. Also, some features of the embodiments of the present disclosure can be used with a material-handling robot with multiple end-effectors suitable for applications in semiconductor wafer processing systems. For example, the above operations may be utilized to pick/place a wafer or substrate from/to an offset station.

The presently disclosed embodiments will be further explained with reference to the attached drawings. The drawings shown are not necessarily to scale, with emphasis instead generally being placed upon illustrating the principles of the presently disclosed embodiments.

### [Brief Description of Drawings]

[Fig. 1A]

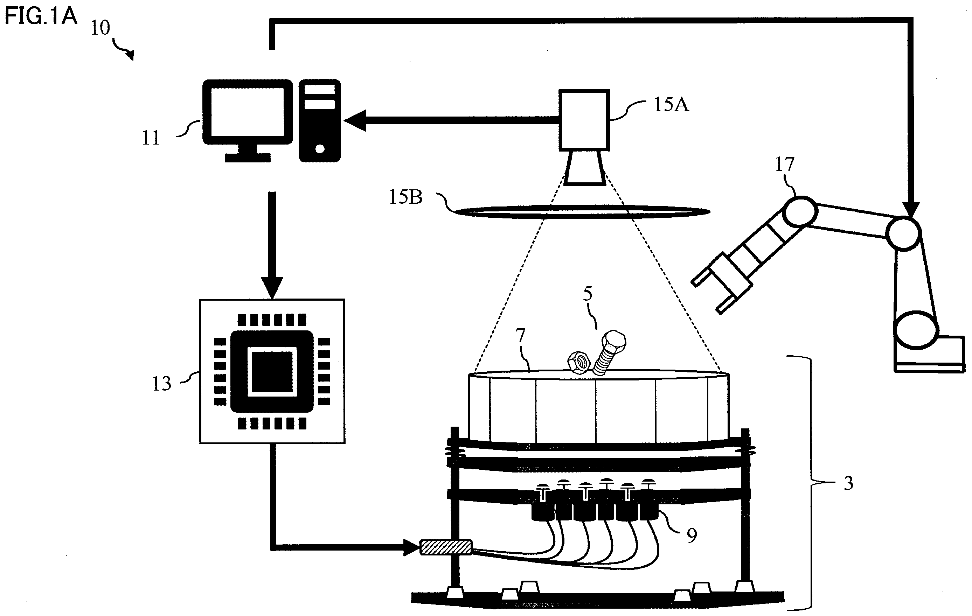

   FIG. 1A is a diagram illustrating an overview of an example robotic assembly for object orientation and manipulation, according to some embodiments;
[Fig. 1B]

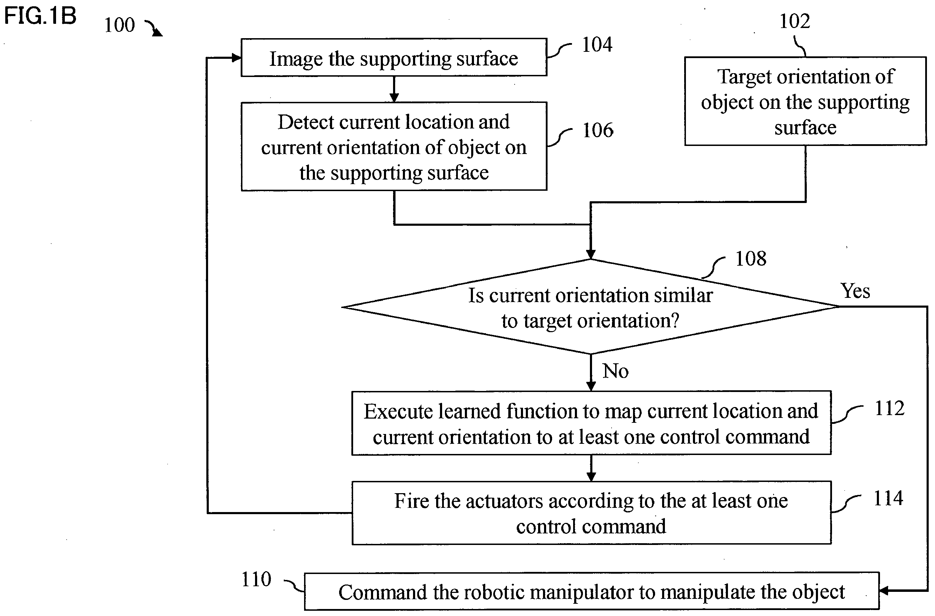

   FIG. 1B is a flowchart illustrating an example method for object orientation and manipulation using principles of some embodiments;
[Fig. 2A]

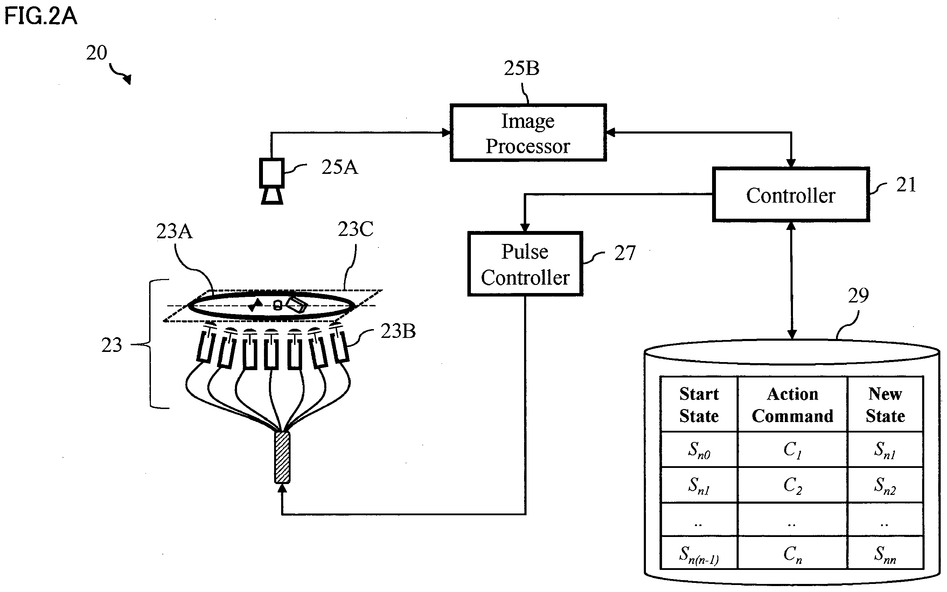

   FIG. 2A shows a schematic diagram illustrating an exemplar training assembly for training a machine learning system to predict control commands corresponding to a current state of an object, according to some embodiments;
[Fig. 2B]

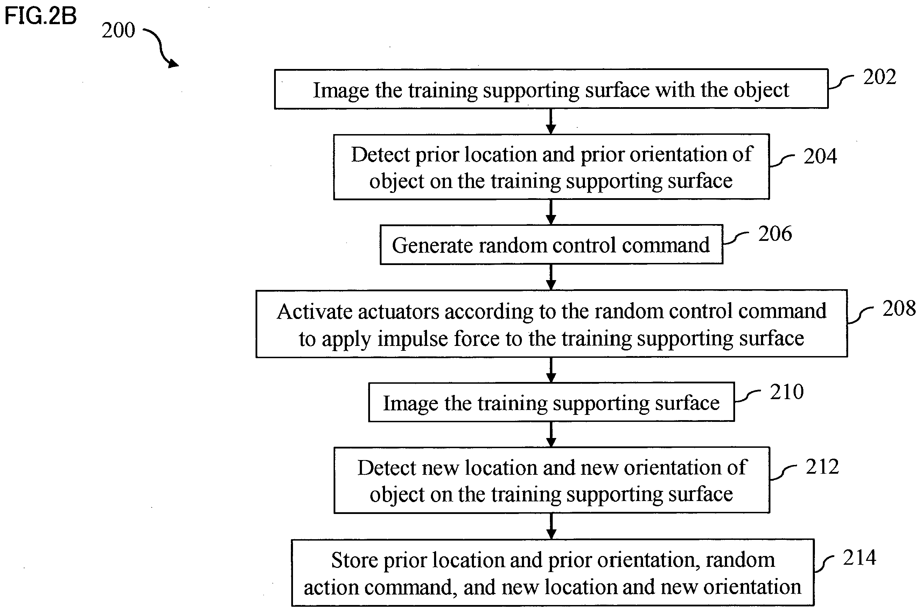

   FIG. 2B illustrates a flowchart showing a sequential workflow of a training method for training the machine learning system of FIG. 2A, according to one embodiment;
[Fig. 3]

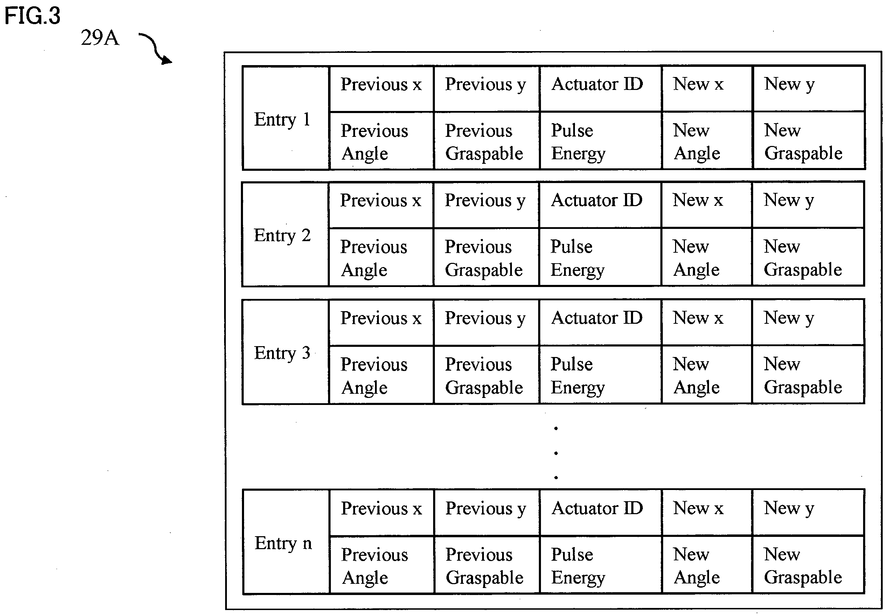

   FIG. 3 shows an example of a training database obtained as an outcome of the training method of FIG. 2B, according to some embodiments;
[Fig. 4]

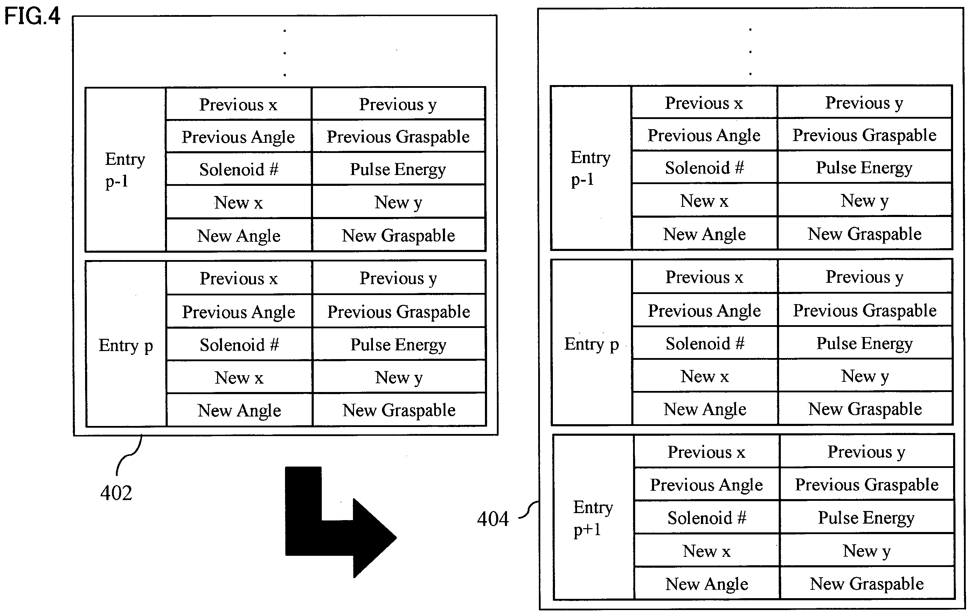

   FIG. 4 illustrates an example of machine learning in learning mode, according to some example embodiments;
[Fig. 5A]

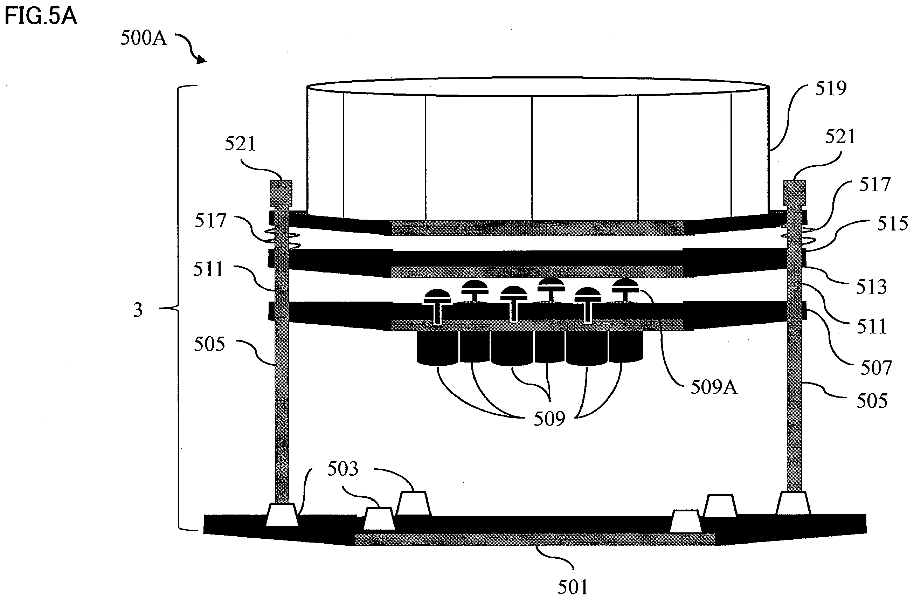

   FIG. 5A illustrates an example overview of an electromechanical subsystem for orienting an object, according to some example embodiments;
[Fig. 5B]

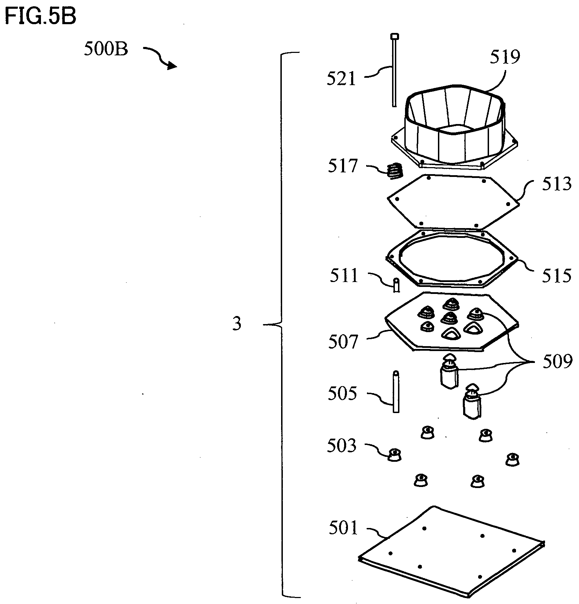

   FIG. 5B illustrates an exploded assembly diagram of the electromechanical subsystem for orienting an object, according to some example embodiments;
[Fig. 6]

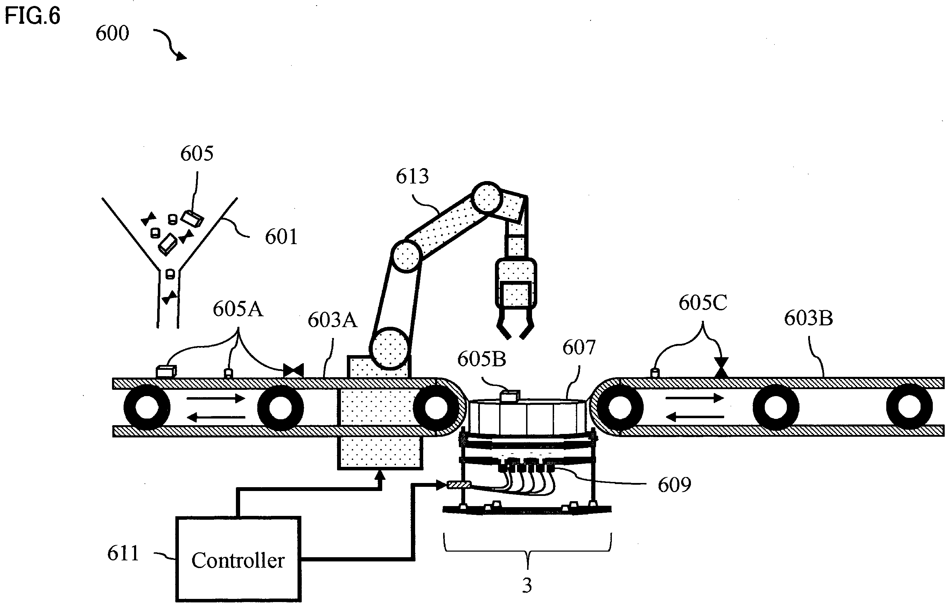

   FIG. 6 illustrates an example scenario for robotic manipulation using a robotic assembly, according to some embodiments;
[Fig. 7]

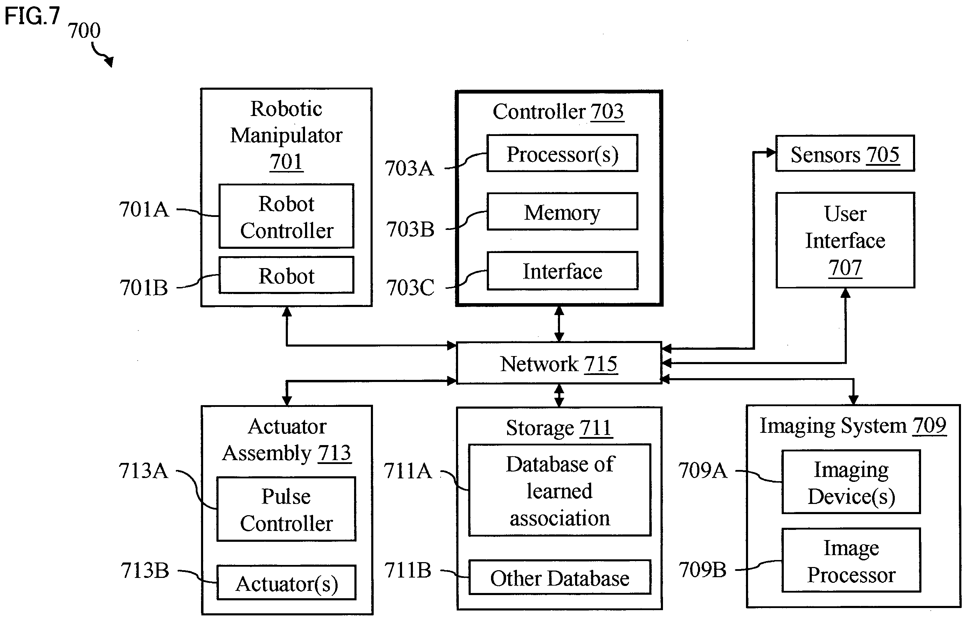

   FIG. 7 illustrates a block diagram of some components of a robotic system for object orientation and manipulation, according to some example embodiments; and
[Fig. 8]

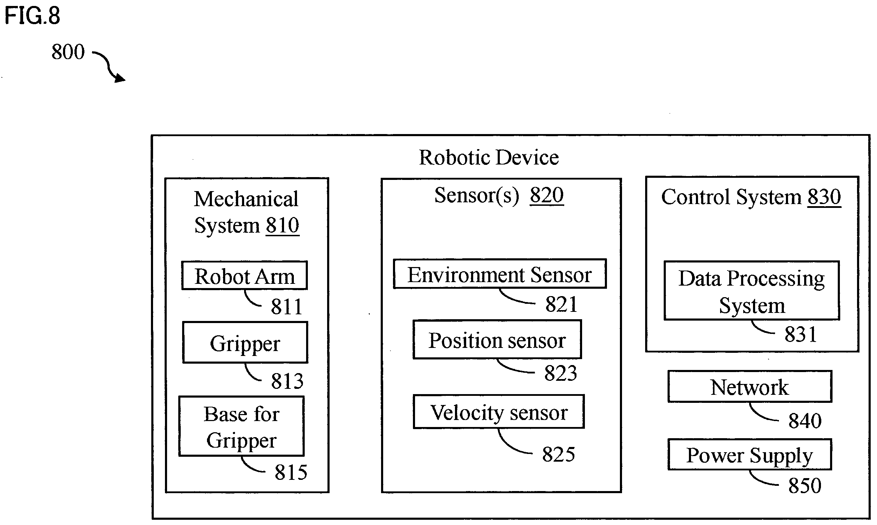

   FIG. 8 illustrates a block diagram of a robotic device for object manipulation, according to some example embodiments.

### [Description of Embodiments]

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Robots are deployed in several tasks ranging from day-to-day activities to complex industrial jobs. Many situations require robots to interact with objects and perform one or more tasks including but not limited to grasping and moving the objects. The objects with which the robots may interact, serve as payloads for the robots. Quite often, the interactions of the robots with their corresponding loads include performing robotic manipulations by manipulators on the payloads. A pose of an object may define a location and orientation of the object with respect to some reference plane such as an object supporting surface. In order to control some operations of such robotic manipulators, quite often it is desired that the object be presented to the robotic manipulators in one or more desired poses. This is especially important in product assembly lines, warehouses and pick and place tasks where an operation on the object may be selectively performed on one or more surfaces of the object or where the object is required to be presented in a desired configuration to fit into the scenario. Additionally, in many robotic uses, it is not sufficient to guide the robot to a pose where the part is graspable; the part must also be oriented in a way that the robot can grasp the part without occluding the areas of the part that will need to be accessed for product assembly to proceed.

Robotic manipulators operate on objects under the guidance of computed trajectories. Trajectory computation in turn requires accurate physical models of the payloads and the environment to generate desired motions for the manipulators to accomplish designated tasks. All of these tasks rely on an assessment of the object in some desired configuration. Therefore, object orientation and the subsequent manipulation are important blocks in industrial tasks.

Example embodiments of the present disclosure are directed towards providing techniques and measures for efficiently orienting any object in a desired target orientation. FIG. 1A illustrates an overview of an example robotic assembly 10 for object orientation and optionally manipulation, according to some embodiments. The robotic assembly 10 comprises a robotic controller 11, an impulse controller 13, an imaging system comprising an imaging device 15A and an illumination source 15B, and an electromechanical subsystem 3. In some example embodiments, the robotic assembly 10 may additionally or optionally comprise a robotic manipulator 17. In some example embodiments, the robotic assembly 10 may comprise additional elements such as a power sub-system, and a communication network.

The robotic controller 11 controls one or more other components of the robotic assembly 10. In this regard, it is contemplated that the robotic controller 11 is communicatively coupled to other components of the robotic assembly 10 through suitable means such as wired or wireless medium. Various tasks performed by the robotic controller 11 may be executed by one or more processors that interface with one or more memories. The memories may store program instructions for execution by the processors and data utilized by the processors. In some example embodiments, at least one of the memories may store a learned function mapping a state of the object 5 to a set of control commands for the actuators 9. Additionally or optionally the robotic controller 11 may comprise or interface with one or more databases of learned association between states of objects and control commands for the actuators 9. The robotic controller 11 may additionally comprise an interface for data communication with other machines and devices such as the other components of the robotic assembly 10.

The impulse controller 13 may be a standalone component of the robotic assembly 10 or may be a part of one or more other components of the robotic assembly 10. For example, in some example embodiments, the impulse controller 13 may be a part of the robotic controller 11 while in some other example embodiments, the impulse controller 13 may be a part of the electromechanical subsystem 3. Irrespective of its association with other components of the robotic assembly 11, the impulse controller 13 may be realized using one or more processors and suitable circuitry to generate impulse signals for a set of actuators 9 of the electromechanical subsystem 3. For example the impulse controller 13 may comprise a microprocessor and an array of high-powered field effect transistor (FET) pulldown pulse generators. The impulse controller 13 produces impulse signals for the actuators 9 under the guidance of control commands issued by the robotic controller 11. The control commands may indicate a subset of the set of actuators that are to be fired and/or the durations and energies with which the actuators are to be fired. Accordingly, the impulse controller 13 may send impulse signals to only those actuators of the set of actuators 9 that are indicated in the control command.

The electromechanical subsystem 3 comprises a supporting surface 7 for supporting one or more objects such as the object 5 and the set of actuators 9 for applying impulse forces to the supporting surface 7. In some example embodiments, the object 5 may be a part, component or any solid body that is capable of being flipped, tilted or moved without being disintegrated upon application of impulse forces on it. For example, the object 5 may be a nut, a bolt, an electronic component, a package, some mechanical or electrical component and the like. The object 5 may have a plurality of stable orientations (i.e. orientations in which the object is in static equilibrium). One or more of the plurality of stable orientations may include a target orientation of the object 5.

The application of some impulse forces by the actuators 9 causes a change in one or more of a location and an orientation of the object 5. In this regard, the actuators 9 may be activated by the impulse controller 13 by providing suitable electrical signals to the actuators 9. The impulse controller 13 operates under the guidance of control commands issued by the robotic controller 11. The control commands for the set of actuators 9 may be defined such that a specific set of control commands submitted to the set of the actuators 9 causes a corresponding specific distribution of energy applied to the supporting surface 7. A control command may be a digital command that identifies the actuators that are to be powered or fired and the duration for which those actuators are to be fired. It may be contemplated that a control command may cause different motions of the object 5 at different locations on the supporting surface 7. That is, the same control command may cause a certain motion of the object 5 at a first current location of the object 5 while it may cause a different motion of the object 5 at a second current location different from the first current location of the object 5.

In some example embodiments, a control command may be defined specific to an actuator of the set of actuators 9. For example, a control command may indicate "fire actuator #n for time period t, where t₁ ≤ t ≤ t₂". In some example embodiments, a control command may be defined for a plurality of actuators. For example, a control command may indicate "fire actuator #n₁ for time period tₙ₁, actuator #n₂ for time period tₙ₂ ... actuator #nₚ for time period tₙₚ, where t₁ ≤ tₙ₁ ≤ t₂, t₃ ≤ tₙ₂ ≤ t₄ .... tₓ ≤ tₙₚ ≤ t_{y}."

The imaging system defined by the imaging device 15A and the illumination source 15B, may additionally or optionally comprise an image processor (not shown) to process images captured by the imaging device 15A. In some example embodiments, the image processing may be performed by a processor that is external to the imaging system such as by the robotic controller 11 itself. The imaging device 15A may be a digital camera or any other suitable imaging source for capturing still images and/or videos of the supporting surface 7 of the electromechanical subsystem 3. The illumination source or illuminator 15B illuminates a field of view of the imaging device 15A. In some example embodiments, the illumination source 15B may be a ring light powered by suitable illumination subsystems such as light emitting diodes (LEDs) or incandescent bulbs. In some example embodiments, the illumination source 15B may be a point source or a beam source illuminator. In some example embodiments, the illumination source 15B may be optional to the imaging system. The image processor may execute suitable image processing algorithms such as machine vision procedures to process the images captured by the imaging device 15A to detect a state or pose of the objects 5 on the supporting surface 7. A state or pose of an object as used herein may correspond to one or more of a location and an orientation of the object on the supporting surface 7.

The robotic controller 11 executes a series of feedback based operations to orient the object 5 at the supporting surface 7 to a target orientation of the object 5. It may be contemplated that the robotic controller 11 may be configured for any number and type of objects and may orient each object in its desired orientation serially. In some other example embodiments, the robotic controller 11 may parallelly or jointly orient multiple objects in their respective orientations using a some or all of the actuators 9 in conjunction with other components of the robotic assembly 10. According to some example embodiments, the robotic controller 11 may terminate operations when an object has been oriented in its desired target orientation. According to some example embodiments, the robotic controller 11 may communicate to another machine or device, a signal indicative of successful orientation of an object in its desired target orientation. For example, the robotic controller 11 may output to a robot an output signal indicating that the object 5 has been oriented in its desired target state so that the robot can initiate further action on the oriented object 5. In another example embodiment, upon successful orientation of the object 5 in its desired target orientation on the supporting surface 7, the robotic controller 11 directly commands the robotic manipulator 17 to manipulate the oriented object 5.

In some example embodiments, the robotic manipulator 17 may be optional to the robotic assembly 10. The robotic manipulator 17 upon being commanded by the robotic controller 11 performs one or more manipulation tasks such as grasping on the object 5. The robotic manipulator 17 may be realized using any suitable configuration according to the manipulation task to be performed on the object 5. For example, in some example embodiments, the robotic manipulator 17 may comprise a robotic arm having grippers for grasping the oriented object 5.

The aforementioned components of the robotic assembly operate in conjunction to facilitate orientation and manipulation of an unoriented object. A detailed working of the robotic assembly 10 is described next with reference to FIG. 1B which illustrates a flowchart of an example method 100 for object orientation and manipulation using principles of some embodiments. In some example embodiments, the method 100 may be triggered by a user, for example by pressing an activation switch. In some example embodiments, the method 100 may be triggered upon detection of the object 5 on the supporting surface 7. In this regard, the robotic assembly 10 of FIG. 1A may comprise suitably sensors such as image sensors, electromagnetic sensors or physical sensors such as weight sensors to detect a presence or arrival of the object 5 on the supporting surface 7.

A target orientation of the object 5 on the supporting surface 7 is accepted 102, for example, from a user through an interface. In some example embodiments, the target orientation may be accepted from another program or device or may be loaded from a memory. In some example embodiments, a target location of the object 5 on the supporting surface may also be accepted at step 102. The supporting surface 7 with the object 5 is imaged 104 with the aid of the imaging device 15A and the illumination source 15B. Image processing using any suitable algorithm including but not limited to machine vision procedures is performed on the captured image of the supporting surface 7 with the object 5 to detect 106 a current location and a current orientation of the object 5 on the supporting surface 7. Hereinafter, the object 5 on the supporting surface 7 may also be referred to as the supported object 5.

The robotic controller 11 performs a check 108 whether the current orientation is similar to the target orientation defined for the supported object 5. The degree of similarity or match may be ascertained with respect to a threshold that may be configurable. For example, the overlap between the current orientation and the target orientation of the supported object may be expressed as a quantified value such as a whole number, fraction or percentage. If the quantified value is greater than or equal to a threshold value, the robotic controller 11 declares it as a match (outputs "Yes" at step 108), otherwise not a match (outputs "No" at step 108).

If the outcome of the check at 108 returns a "Yes" (i.e. the current orientation of the object 5 matches the target orientation) the control of steps passes to step 110 where the robotic controller commands the robotic manipulator 17 to manipulate the supported object 5. However, if the outcome of the check at 108 returns a "No" (i.e. the current orientation of the object 5 does not match the target orientation) the control of steps passes to step 112 where the robotic controller 11 executes a learned function stored in memory to map the current location and the current orientation of the supported object 5 to at least one control command for the set of actuators 9. The robotic controller 11 invokes the learned function from a memory and submits the detected current location and current orientation of the object 5 as an input to the learned function.

In some example embodiments, the learned function may interface with a training database storing data indicative of an association between the object's states and control commands for the actuators. The extract of the training database may be consolidated to select at least one control command. In some example embodiments, the extract may be sorted by one or more of actuator identifier (an identity of each actuator) and impulse duration. The most common command (e.g., the command that was the statistical "mode" for successful graspability) may accordingly be selected. In some example embodiments, a command with the lowest required actuator impulse duration (energy ) may be selected. In some example embodiments, an inverse-distance weighting may be used to select the command.

This selection process is significantly simplified by the quantization of the commands, so that the total set of possible commands is relatively small. For example, for a system with seven actuators and three power levels of duration 17, 21, and 25 milliseconds, the full command vocabulary may be 21 possibilities, which may be relatively tractable for the machine learning procedures to operate with. The training database may be embodied locally as a part of the robotic assembly 10 or may be partly or fully hosted on a cloud service.

In some example embodiments, the entire command selection function may be fully hosted on a cloud service, typically by uploading the raw image from the camera, implementing step 106 of detecting current location and orientation, step 108 of location comparison, and step 112 of execution of the learned function to select at least one control command, and subsequently downloading the selected control command to be executed locally. Such an embodiment provides the ability to utilize a small and inexpensive local computing resource, while effectively time-sharing an expensive GPU-based machine-learning algorithm, as well as allowing the use of a proprietary learned function and/or proprietary database. In another example embodiment, the current location and orientation determination 106 may be performed locally, and only the orientation and location may be uploaded to the cloud and the selected firing command subsequently downloaded from the cloud, again allowing the effective use of expensive machine-learning hardware and/or securely using a proprietary learned function and/or a proprietary database.

The learned function predicts at least one control command for the actuators 9 corresponding to the inputted current location and current orientation of the object 5. The at least command is submitted to the impulse controller 13 for activating one or more of the actuators 9. In some example embodiments, some learned functions may have configurations where no command may be selected according to the nominal command selection procedure of the embodiments described above. In such cases where the learned function's procedures do not fetch any command, a random command may be selected.

Using the at least one control command, the set of actuators 9 are fired 114 to apply a corresponding specific distribution of energy at the first current location of the object 5 at the supporting surface 7 to increase a likelihood of changing the first current orientation to the target orientation of the object 5. It may be contemplated that each actuator of the set of actuators 9 applies an impulse force to the supporting surface 7 with energy governed by a corresponding control command or a set of control commands. The control of steps then passes back to step 104 to image the supporting surface 7 again and repeat steps 106 and 108 until the object 5 is oriented in the target orientation.

In this way, the robotic assembly 10 using the method 100 can orient the object 5 in any desired target orientation. In some example embodiments, it may only be desired that the object 5 is oriented in the target orientation and there may not be requirement of a manipulation on the object 5. In such scenarios, if the check at step 108 returns a "Yes", the method 100 may be terminated and in such cases, step 110 may not be executed.

The learned function may be a classifier learned using any or a combination of suitable learning algorithms such as k-nearest neighbors algorithm (k-NN), a support-vector machine (SVM) algorithm, an rN (radius-neighborhood) algorithm, a random forest algorithm, a relevance vector machine (RVM) algorithm, a reinforcement learning (RL) algorithm, or a backward propagation minimizing a loss function. To learn such a function and obtain an association between a state of the object and control commands for the actuators, a training procedure may be implemented beforehand. In some example embodiments, the learning of the function may be a continuous process.

FIG. 2A shows a schematic diagram illustrating an exemplar training assembly 20 for training a machine learning system to predict control commands corresponding to a current state of an object, according to some example embodiments. In some example embodiments, the training assembly 20 may be embodied as the robotic assembly 10 of FIG. 1A. In some example embodiments, the training assembly 20 may be a system that is distinct and separate from the robotic assembly 10 of FIG. 1A. In such scenarios, the training assembly 20 may be communicatively coupled to the robotic assembly 10, and may be invoked for training a learned function using machine learning.

The training assembly 20 comprises a training controller 21, a training subsystem 23, a training imaging system comprising an imaging device 25A and an image processor 25B, a pulse controller 27 and a training database 29. Additionally, the training assembly 20 comprises an interface (not shown) for communicating data among the components of the training assembly 20 or with an external device. For example, the interface may be embodied as an input interface for accepting a target orientation of an object at the training supporting surface.

Structurally and functionally, the training controller 21 may be similar to the robotic controller 11 of FIG. 1A, the imaging device 25A may be similar to the imaging device 15A of FIG. 1A, the pulse controller 27 may be similar to the pulse controller 13 of FIG. 1A, and the training subsystem 23 may be similar to the electromechanical subsystem 3 of FIG. 1A.

The training subsystem 23 comprises a training supporting surface 23A for supporting objects for orientation and a plurality of actuators 23B for applying impulse forces on the training supporting surface 23A. The imaging device 25A with the aid of the image processor 25B images the training supporting surface 23A and detects the location and orientation of objects placed on the training supporting surface 23A. The location and/or the orientation of each object on the training supporting surface 23A may be defined relative to a plane 23C of the training supporting surface 23A. The pulse controller 27 comprises a random pulse generator which may be controlled based on an input from the training controller 21. The random pulse generator generates random pulses for the actuators 23B, each random pulse activating one or more random actuators of the actuators 23B for a fixed or random duration of time. The training database 29 together with the training controller 21 may define a machine learning system.

In order to obtain a learned association between object states and control commands for actuators, the operational aspects of the training assembly 20 is described with reference to FIG. 2B which illustrates a flowchart showing a sequential workflow of a training method 200 for training the machine learning system of FIG. 2A, according to one embodiment. FIG. 2B will be described considering one training object on the training supporting surface 23A, however, it may be contemplated that such a training procedure can be extended to any type and any number of training objects.

The training supporting surface 23A supporting a training object is imaged 202 and the location and orientation of the supported training object is detected 204. The location and orientation detected at step 204 may be referred to as 'prior location" and 'prior orientation' of the training object. A random action command in the form of a random pulse from the pulse controller 27 is generated 206 and submitted to the set of actuators 23B. In this regard, the pulse controller 27 selects a randomly chosen actuator from the actuators 23B and a randomly chosen impulse power and transmits this random action command to the actuator array 23B as a part of step 206.

According to some example embodiments, for some machine learning procedures (for example kNN and rN) it may be preferred that the pulse controller 23B generates quantized random action commands rather than continuum commands. For example instead of randomly choosing the impulse power from the set of real numbers, choosing instead from a small set of integers may be preferred.

Accordingly, the actuators 23B are activated 208 to apply one or more impulse forces to the training supporting surface 23A. This results in a kinetic impulse being applied to the object, causing the object to move to a new orientation and/or position. The distribution of energy produced by an impulse force is not location agnostic at least along axes that lie in the plane 23C. In some scenarios, the application of the impulse forces may or may not change the location and/or the orientation of the object on the training supporting surface 23A. To ascertain this, the training supporting surface 23A is imaged 210 again and the post-command location and orientation of the object on the training supporting surface 23A is detected 212. The location and orientation of the object on the training supporting surface 23A detected at step 212 may be considered as a new location and a new orientation of the object on the training supporting surface 23A. The prior location and the prior orientation detected at step 204, the random action command used at step 208, and the new location and new orientation detected at step 212 are stored 214, for example as an entry in the database 29. For example, the prior location and the prior orientation detected at step 204 may define a start state of the object and are stored under the column "Start State" of the database 29, the random action command used at step 208 is stored under the column "Action Command" in the database 29, and the new location and new orientation detected at step 212 may define the new state of the object and are stored under the column "New State" in the database 29. In some example embodiments, the post-command orientation of the object on the training supporting surface 23A may be detected as 'indeterminate' at step 212. In such scenarios, the control of steps may return back to step 206 and a random control command may be generated again and the actuators be activated at step 208 to apply impulse forces to the object to change its orientation from 'indeterminate' to a recognizable orientation.

The steps 202-214 may be repeated continuously and/or sequentially and several entries may be recorded in the database 29. In this way, an association between a start state (starting location and starting orientation), a new state (a new location and a new orientation), and the random action command(s) that caused the change from the start state to the new state, for several instances may be learned in an unsupervised manner as an outcome of the training method 200. In some example embodiments, the steps 202-214 may be carried out with a reference orientation of an object in consideration. For example, entries for such iterations in which the new orientation of the object is same as the reference orientation of the object, may only be recorded in the database along with the immediate prior location of the object, the immediate prior orientation of the object and the random action command/commands used. In some example embodiments, the training procedures may be configured according to the needs of the end objective. For example, where the end objective is robotic manipulation of the object, the training procedure may be carried out with graspability of the object by a robot as the deciding factor for registering an entry in the database. In such scenarios, for every new orientation detected at step 212, a robotic manipulator may attempt to grasp the object to determine a graspability of the object in the new orientation. Accordingly, an entry may be recorded in the database 29 to include whether the object is graspable in the new orientation or not.

It may be noted that a same random control command may cause different motions of the object in two instances if the starting location of the object is different in the two instances. For example the same impulse command to a center actuator with an object to the left of center may move the object further left, whereas if the object is to the right of the center actuator, the impulse command may move the object further to the right. In this case, the induced rotations of the object may also be opposite. For this reason, it is important to record the entry with the start location along with the start orientation of the object under the "Start State" column in the training database 29. Similarly, during prediction stage, the imaging system delivers both the current location as well as orientation of the object.

FIG. 3 shows an example of another training database 29A obtained as an outcome of the training method of FIG. 2B, according to some embodiments. In some example embodiments, the training database 29A may be a database used for a kNN or rN machine learning procedure. The database 29A may pertain to an object orientation and manipulation task. The database 29A may store several entries (Entry 1-Entry n). Each entry in the database 29A comprises a previous or prior location of the object on the training supporting surface 23A, a previous orientation of the object, a previous graspable state of the object, an identifier of the actuator(s) fired/activated and the corresponding value of pulse energy applied, a new location of the object on the training supporting surface 23A, a new orientation of the object, and a new graspable state of the object. The locations (previous and new) may be expressed in two dimensions for example in a cartesian coordinate system (having x and y axes) while the orientations (previous and new) may be expressed as angles defined about an axis of the object relative to some plane. The graspable states (previous and new) may be indicated as either graspable or not graspable. The entries of the database 29A may be alphanumeric in the fields. In some implementations, the database 29A may be stored in a memory, for example in binary to expedite searching of the database. Another preferred implementation of database 29A may be a so-called "adaptive grid", wherein the database may be split into a plurality of sub-databases, often in the form of a grid or checkerboard according to binning on the Previous X and Previous Y values. Such a splitting may eliminate the need to scan the entire database 29A to find closest matches for kNN or rN. Instead, it suffices to scan only the sub-databases square containing a query location, and the sub-databases corresponding to the eight adjacent checkerboard squares of the query location.

In some preferred implementations, the training database 29 or 29A may be further processed by machine learning methods such as support vector machines (SVM), random forest decision trees (RF), a neural network (NN), principal component analysis (PCA), or other machine learning methods. However, because the impulse manipulation process may be rapid and because in most preferred implementations the image processing procedures generate both position and orientation as well as robot graspability information, the learning process through the method 200 may be executed several times in a single day, fully autonomously and without requiring any human intervention beyond setting the system up and supplying example cases of "graspable" and "not graspable". For example, the learning process through the method 200 may be executed at rates over once per second, yielding sixty thousand training data samples in a single overnight run.

With such large volumes of data available and such a small requirement in human effort, purely memory-based machine learning methods such as a kNN (k-nearest-neighbor) and rN (radius neighborhood) can be used effectively with the example embodiments. Both kNN and rN have only a single tunable parameter (the number of samples "k" and the radius of the neighborhood "r" respectively) and so relatively little if any human expertise is required. In some example embodiments, by using a LOO (Leave One Out) methodology, the training database and learning algorithm can be tested against itself, to see if it generates a known-result command given a database containing all except the known-result command, from orientation and position of an object. One such preferred embodiment may use LOO to optimize the number of samples "k" ( for a kNN-based machine learning system) or radius of samples "r" (for an rN-based machine learning system) by means of generating an ROC curve. By choosing "k" or "r" as the value where the AUC (Area Under Curve) of the ROC curve is maximized (possibly with a limit of computational time as well as optimization for accuracy) then choice of "k" or "r" may be made essentially automatically, thereby reducing human intervention even further.

By using the ROC AUC optimization, the entire machine learning process becomes completely self-supervised, requiring no human intervention at all beyond the mechanical setup and the human providing designation of one or more orientations and positions for the object.

The training procedures of FIG. 2B may be carried out in a continuously repeated manner and the learning may simply comprise appending an entry to the database 29. FIG. 4 illustrates one such example of machine learning in learning mode, according to some example embodiments. For example, entries of database 402 may comprise entries up to a p^{th} iteration. An additional iteration of steps 202-214 of the training procedures of FIG. 2B yields another set of entry as Entry p+1 which is appended to the end of the list to obtain an updated database 404.

Another aspect of some example embodiments of this disclosure is a novel design for an electromechanical subsystem for orienting an object in its desired target orientation which is described next with reference to FIGs. 5A and 5B. FIG. 5A illustrates an example overview 500A of the electromechanical subsystem 3 of FIG. 1A for orienting an object, according to some example embodiments. FIG. 5B illustrates an exploded assembly diagram 500B of the electromechanical subsystem for orienting an object, according to some example embodiments. The electromechanical subsystem 3 may be realized as a flexible bowl feeder or an impulse manipulator assembly comprising a base plate 501, a set of vibration dampers 503, a set of long spacer tubes 505, an impulse actuator mounting plate 507, an array of impulse generating actuators 509, a set of short spacer tubes 511, a semi-flexible bowl base panel 513, adapted to dampen one or more impulse forces from the set of actuators and transmit at least some of the damped one or more impulse forces to the object, a bowl base support plate 515, a set of retention springs 517, an object retaining corral 519, and retention bolts 521.

The base plate 501 may be a rigid and preferably heavy plate that provides a stable mounting base for the impulse manipulator assembly. In at least some embodiments, the set of vibration dampers 503 are used to isolate the moving objects of the impulse manipulator assembly and minimize noise during operation. There may be one vibration damper for every long spacer tube 505. The set of long spacer tubes 505 provide support for the impulse actuator mounting plate 507. Although FIG. 5A shows only two of them for clarity, it may be contemplated that the impulse manipulator assembly may have more than two such long spacer tubes. The impulse actuator mounting plate 507 provides a rigid mounting location for the array of impulse generating actuators 509.

Above the impulse actuator mounting plate 507 is the set of short spacer tubes 511. Although FIG. 5A shows only two of them for clarity, it may be contemplated that the impulse manipulator assembly may have more than two such short spacer tubes. The short spacer tubes 511 provide a working clearance gap between the ends of the actuator cores 509A (in the un-actuated position) and the semi-flexible bowl base panel 513. Directly riding on top of the short spacer tubes 511 is the bowl base support plate 515 that supports the semi-flexible bowl base panel 513 from distorting downward under the weight of objects on the semi-flexible bowl base panel 513. In this regard, bowl base support plate 515 may have one or more holes strategically placed to allow the cores 509A of individual actuators 509 to directly strike the semi-flexible bowl base panel 513.

Above the semi-flexible bowl base panel 513 are a set of retention springs 517. Although FIG. 5A shows only two of them for clarity, it may be contemplated that the impulse manipulator assembly may have more than two such retention springs. These retention springs 517 allow the semi-flexible bowl base panel 513 to move easily in the vertical direction during an impulse, but keep the bowl base panel 513 flat when no impulse force is applied. On top of the retention springs 517 is the object retaining corral 519 that retains one or more objects for orientation over the general area that the actuator array 509 can strike. Also, either threaded rods or retention bolts 521 may be provided to maintain the assembly in vertical alignment. Although FIG. 5A shows only two of them for clarity, it may be contemplated that the impulse manipulator assembly may have more than two such threaded rods or retention bolts.

In some example embodiments, the actuator array 509 may comprise a plurality of solenoids that generate vertical motion of the cores 509A upon activation. The vertical motion of the cores 509A causes the cores 509A to penetrate through the bowl base support plate 515 and strike the semi-flexible bowl base panel 513 with an impulse force. The impulse force thus applied depends on the impulse power supplied to the actuator/solenoid. The lower bound on the impulse power may be the minimum energy required to push a solenoid through the gap generated by short spacer tube 511 and just touch the semi-flexible bowl base panel 513. The upper bound on the impulse power duration is when a solenoid remains in the fully extended position even after the semi-flexible bowl base panel 513 has lifted by inertia away from the solenoid and is no longer in contact with it. The value of upper bound on the impulse power duration may vary depending on the density, rigidity, and thickness of the semi-flexible bowl base panel 513.

In some other example embodiments, the actuator array 509 may comprise other forms of actuators and may produce the desired impulses by the use of hydraulic or pneumatic cylinders or strikers, piezoelectric transducers, rotary strikers, impingement of a fluid such as pressurized water or compressed air on the semi-flexible base plate 513, or even direct impingement of a fluid such as compressed air, pressurized water, or pressurized oil flowing through plate 503 or part retention corral 519 containing perforations, nozzles, or areas of penetrable mesh. In some example embodiments, more than one type of impulse transducer may be used in a single embodiment, for example, electromagnetic solenoids generating upward impulses while pulses of compressed air firing horizontally from nozzles in the part retention corral may be simultaneously fired to generate horizontal shear forces.

Additionally, in some example embodiments, the impulse manipulator shown in FIGs 5A and 5B may comprise optional locking nuts that can be inserted on the threaded rods or retention bolts 521 to maintain a higher stack pressure than retention springs 517 alone would allow. In some example embodiments the use of only locking nuts instead of long spacer tubes 505 and short spacer tubes 511may also provide a larger range of adaptability to the system. In some example embodiments, elastomeric springs such as rubber tubes or rubber bellows may be used in place of retention springs 517. In some example embodiments, a compressible material such as leather washers, or another material that allows small motions of the semi-flexible bowl base panel 513 may be used in place of retention springs 517.

The unique structure of the electromechanical system 3 realized as an impulse manipulator assembly shown in FIGs. 5A and 5B provides greater flexibility in orienting an object by allowing precise application of impulse forces to the semi-flexible bowl base panel 513. The provisions for reliable dampening of the applied impulse forces ensures objects do not get thrown out of the corral and also reduces noise during operation.

FIG. 6 illustrates an example scenario 600 for robotic manipulation using a robotic assembly, according to some embodiments. Particularly, FIG. 6 illustrates application of the robotic assembly 10 of FIG. 1A in an assembly line for assisting object manipulation when an object is desired to be in a target orientation before manipulation or other tasks in the assembly line is performed on or using the object. As shown in FIG. 6, an object dispenser 601 may singulate objects 605 for delivery to a conveyor 603A that transports the singulated objects 605A to an impulse manipulator sub-assembly such as the electromechanical subsystem 3 illustrated in FIGs. 1A, 5A, and 5B for orienting one or more of the objects 5 such as the object 605B in a corresponding target orientation. The electromechanical subsystem 3 may be controlled by the controller 611 to orient incoming objects such as the object 605B. A robotic manipulator 613 may sequentially perform suitable manipulation tasks on the oriented objects. The manipulated objects may then be transferred onto the conveyor 603B, for example by the robotic manipulator 613 or a separate robot. The conveyor 603B transports the manipulated objects 605C to a next stage in the assembly line.

The controller 611 controls operations of a robotic manipulator 613 and the electromechanical subsystem 3. In some example embodiments, the controller 611 may be a centralized controller for controlling other operations in the assembly line such as the operations of the conveyors 603A, 603B, the object dispenser 601, one or more imaging systems and the like. In some example embodiments, each component of the assembly line may have a separate controller and the controller 611 may only control the operations of the electromechanical system 3.

For each one of the objects 605, the target orientation may be predefined, dynamically defined, or provided by another program or device. The supporting surface 607 of the electromechanical subsystem 3 that receives the incoming objects 605A may be equipped with suitable sensors (not shown) such as weight sensors for detecting presence or arrival of an object 605B on the supporting surface 607. In some example embodiments, the presence or arrival of the object 605B on the supporting surface 607 may be detected by an imaging system (not shown) comprising an imaging device, illumination source and an image processor similar to the embodiment described with reference to FIG. 1A. The detection of the presence or arrival of the object 605B is communicated to a controller 611 that triggers an object orientation method such as the method 100 of FIG. 1B.

Upon detection of the object 605B on the supporting surface 607, the controller 611 obtains a target orientation corresponding to the object 605B. In some example embodiments, the target orientation may be user defined and may be provided as an input via an input interface. In some example embodiments, the target orientation may be dynamically determined on the fly. In this regard the controller 611 may invoke an imaging system similar to the one described with reference to FIG. 1A to capture an image of the object 605B on the supporting surface 607. In some example embodiments, the controller 611 may execute an object identification program to determine a type of the object based on the captured image of the object 605B on the supporting surface 607. In some example embodiments, the object type identification using the captured image of the object 605B may be performed by another processing system such as an image processor of the imaging system, and the controller 611 may receive data indicative of the identified type from such an imaging system. The controller 611 fetches a target orientation of the identified type of object from a memory or a database.

The controller 611 also obtains a current location of the object 605B on the supporting surface 607 and a current orientation of the object 605B on the supporting surface 607 in a manner similar to that described for step 106 of FIG. 1B. The controller 611 then executes steps 108-114 of FIG. 1B until the object 605B is oriented in its target orientation. Upon successful orientation of the object 605B in its target orientation, the controller 611 may instruct or command the robotic manipulator 613 to manipulate the object 605B. The manipulation task may include picking the oriented object 605B and transferring it onto the conveyor 603B for transportation to other stages of the assembly line.

FIG. 7 illustrates a block diagram of some components of a robotic system 700 for object orientation and manipulation, according to some example embodiments. The robotic system 700 comprises a robotic manipulator 701, a controller 703, one or more sensors 705, a user interface 707, an imaging system 7-9, a storage 711, an actuator assembly 713, and a network 715.

The controller 703 comprises one or more processors 703A, a memory 703B, and an interface 703C. The one or more processors 703A execute instructions, programs and codes stored in the memory 703B to carry out the functionalities performed by the controller 703. In this regard, the one or more processors may be embodied by any one or more of a myriad of processing circuitry implementations, for example as a FPGA, ASIC, microprocessor, CPU, and/or the like. In some embodiments, the processors may include one or more sub-processors, remote processors (e.g., "cloud" processors) and/or the like, and/or may be in communication with one or more additional processors for performing such functionality. For example, in at least one embodiment, one or more of the processors 703A may be in communication, and/or operate in conjunction with, another processor external to the controller 703.

The memory 703B may provide storage functionality, for example to store data processed by the controller 703 and/or instructions for providing the functionality described herein. In some embodiments, the processors 703A may be in communication with the memory 703B via a bus for passing information among components of the controller 703. The memory703B may be non-transitory and may include, for example, one or more volatile and/or non-volatile memories. For example, the memory 703B may be an electronic storage device (for example, a computer readable storage medium) comprising gates configured to store data (for example, bits) that may be retrievable by a machine (for example, a computing device like the processors 703A). The memory 703B may be configured to store information, data, content, applications, instructions, or the like, for enabling the controller to carry out various functions in accordance with the example embodiments of the present invention. For example, the memory could be configured to buffer data for processing by the processors 703A. Additionally, or alternatively, the memory 703B could be configured to store instructions for execution by the processors 703A.

The controller 703 utilizes the interface 703C to communicate with components and devices external to the controller 703. In this regard, the interface 703C may be any suitable input/output interface, a communication interface and the like.

The robotic manipulator 701 comprises a robot controller 701A having a structure similar to the controller 703 and a robot 701B. The robot 701B may be any electromechanical robot that is capable of manipulating objects, parts and components. The robotic system 700 further comprises one or more sensors 705 for sensing and detecting one or more parameters, data or information. For example, the sensors 705 may include image sensors, sound sensors, temperature sensors, gyro sensors, position sensors, weight sensors, electromagnetic sensors and the like. The robotic system 700 also comprises a user interface 707 for receiving inputs, data, and feedbacks from a user such as an operator of the robotic system 700.

The robotic system 700 also comprises an imaging system 709 comprising one or more imaging devices 709A and an image processor 709B. The imaging devices 709A comprise a plurality of image sensors, for example, a near-field image sensor configured for capturing image data objects in a near field of view, optics embodied by one or more lens(es) and/or other optical components configured to enable light to transverse through and interact with the image sensor. The image processor 709B may include one or more processors or a microcontroller hard coded for executing image processing algorithms.

The robotic system 700 also comprises a storage 711 comprising a database 711A of learned association between object states and control commands and other databases 711B. The database 711A may be similar to database 29 of FIG. 2A. The other databases 711B may store other data required or generated by one or more components of the robotic system 700. For example, the other databases 711B may store images captured by the imaging system 709.

The robotic system 700 also comprises an actuator assembly 713 having an impulse controller 713A and an array of actuators 713B. The impulse controller 713A may be similar to the impulse controller 13 of FIG. 1A. The actuator array 713B may comprise a plurality of solenoids controlled by the pulse controller 713A. Each solenoid has a top core that is configured to move in a vertical direction with respect to a base of the solenoid, the top core configured to apply an impulse force to a surface in its vicinity. In some example embodiments, the solenoids may be servo controlled.

One or more components 701-713 of the robotic system 700 may communicate with each other through a network 715. The network 715 may be wired, wireless or a combination of both.

FIG. 8 illustrates a block diagram of a robotic device 800 for object manipulation, according to some example embodiments. The robotic device may be embodied as an object manipulator such as the robotic manipulator 17 of FIG. 1A. According to some example embodiments, the robotic device 800 comprises a mechanical system 810, sensors 820, control system 830, network 840 and power supply 850. The mechanical system 810 consist of robot arm 811, gripper 813 and base for gripper 815. The sensors 820 may consist of environment sensor 821, position sensor 823, and velocity sensor 825. The control system consists of a data processing system 831. In general, the control inputs for the robot arm are the motor torques that the robot has to apply at each of the joints to move to the desired pose from an initial pose.

The robot arm 811 is controlled using a robot control system 830 such as the robot controller 701A that receives a command or task that may be externally supplied. An example of the command or task could be touching or grasping an object using grippers 813. The robot control system 830 sends a control signal to the robot arm 811. The control signal may be the torques to be applied at each of the joints of the robot arm 811, and opening/closing of the gripper 813. The state of the robotic device 800 may be derived using sensors 820. These sensors may include encoders at the joints of the robotic arm 811, and a camera that can observe the environment of the robotic device 800 and tactile sensors that can be attached to the fingers of the gripper 813. The robot control system 830 may execute a policy to achieve some task or command.

In some example embodiments the sensors 820 may include a camera as the environment sensor 821. The camera may be an RGBD camera which can supply both an RGB color image and a depth image. The internal information from the RGBD camera can be used to convert the depth into a 3D point cloud. In another embodiment the camera can be a stereo camera, consisting of two color cameras for which depth and 3D point cloud can be computed. In yet another embodiment the camera can be a single RGB camera, and 3D point cloud can be estimated directly using machine learning. In another embodiment, there could be more than one camera. Finally, in another embodiment the camera can be attached at some point on the robot arm 811, the gripper 813 or the base of the gripper 815.

In this way, example embodiments provide a universal object orientation assembly that can orient any rigid body in a desired orientation and can be customized according to needs and properties of the object. Such a universal orientation assembly does not require any mechanical alteration of the bowl or corral. In order to adapt the exemplar impulse manipulator to different objects, only the software for the manipulator needs update, thereby providing a highly flexible system. Furthermore, such an update to the software may be performed in a self-supervised training manner as discussed previously, without human intervention. Additionally, example embodiments described herein provide means to orient objects in a very short interval, thereby leading to application of the embodiments to a wide variety of industrial and robotic tasks.

The above-described embodiments of the present disclosure can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

## Claims

1. A robotic assembly (10), comprising:
a supporting surface (7) configured to support an object (5);
an imaging system configured to image the supporting surface (7) and generate a plurality of instances of pose data of the object at the supporting surface (7);
a set of actuators (9) coupled with the supporting surface (7), wherein each actuator (9) of the set of actuators (9) is configured to apply an impulse to the supporting surface (7) with energy governed by a corresponding control command of a set of control commands;
a memory (703B) configured to store a learned function that maps a location and an orientation of the object at the supporting surface to one or more commands of the set of control commands, wherein the learned function is trained in a self-supervised manner to learn a probability of each actuator (9) of the set of actuators (9) to put the object (5) into a desired pose as a function of a position and orientation of the object (5); and
a processor (703A) configured to:
accept the plurality of instances of pose data of the object (5) at the supporting surface (7);
obtain a first current location and a first current orientation of the object (5) based on a first instance of the plurality of instances of the pose data of the object (5);
execute the learned function to map the first current location and the first current orientation of the object to at least one control command of the set of control commands, wherein the at least one control command defines at least one actuator (9) of the set of actuators (9) to be controlled such that a probability of the at least one actuator (9) changing the first current orientation of the object (5) to a target orientation of the object (5) is maximum;
submit the at least one control command to the set of actuators (9) to apply a corresponding specific distribution of energy at the first current location of the object (5) at the supporting surface (7) to increase a likelihood of changing the first current orientation to the target orientation of the object (5);
obtain a second current orientation of the object (5) based on a second instance of the plurality of instances of the pose data of the object (5);
iteratively repeat the above processor commands until the object is oriented in the target orientation; and
command a robotic manipulator (17) to manipulate the supported object (5) based on a match between the second orientation of the object (5) and the target orientation;
wherein the supporting surface (7) further comprises:
a semi-flexible layer (513) adapted to dampen one or more impulse forces from the set of actuators (9; 509) and transmit at least some of the damped one or more impulse forces to the object (5);
a part retaining corral (519) on the semi flexible layer (513) adapted to retain the object (5) within the supporting surface (7);
a set of retention springs (517) in between the part retaining corral (519) and the semi-flexible layer (513); and
an actuator mounting plate (507) underneath the semi-flexible layer (513), wherein the set of actuators are rigidly mounted on the actuator mounting plate.

2. The robotic assembly (10) of claim 1, further comprising the robotic manipulator, wherein the robotic manipulator is configured to grasp the object (5) at one or more contact surfaces.

3. The robotic assembly (10) of claim 1, wherein the learned function is a classifier learned with one or a combination of k-nearest neighbors algorithm (k-NN), a support-vector machine (SVM), an rN (radius-neighborhood), a random forest, a relevance vector machine (RVM), a reinforcement learning (RL), a backward propagation minimizing a loss function; and/or
wherein the learned function is a classifier learned with a radius neighbors (rN) selector of a k-nearest neighbors (k-NN) learning.

4. The robotic assembly (10) of claim 1, wherein the processor is further configured to train the learned function during a training stage, wherein for the training stage, the processor is configured to:
collect the target orientation of the object (5) on the supporting surface (7);
submit to the set of actuators (9) multiple sets of random control commands to apply different distributions of energy at different locations of the supporting surface (7);
detect, using the imaging system, an orientation change of the object (5) for each of the different distributions of energy; and
train parameters of the learned function to produce the sets of control commands to the set of actuators (9) increasing the likelihood of the different distributions of energy at the current location of the object (5) to change a current orientation of the object (5) to the target orientation.

5. The robotic assembly (10) of claim 1, wherein the robotic assembly (10) is communicatively coupled with a training system for training the learned function using machine learning, wherein the training system comprises:
a training supporting surface (23A);
a training imaging system configured to image the training supporting surface (23A);
a set of training actuators (23B), each training actuator (23B) is configured to apply an impulse to the training supporting surface (23A) with energy governed by a corresponding training control command, such that a specific set of training control commands submitted to the set of the training actuators (23B) causes a corresponding specific distribution of energy applied to the training supporting surface (23A);
an input interface configured to accept a target orientation of the object at the training supporting surface (23A);
a training processor and a training memory having instructions stored thereon that cause the training processor to train the learned function, wherein, to train the learned function, the training processor is configured to:
submit to the set of training actuators different multiple sets of training control commands to apply different distributions of energy at different locations of the training supporting surface (23A);
detect, using the training imaging system, a change of the orientation of the object for each of the distributions of energy; and
train parameters of the learned function to produce a set of output commands for the set of actuators (23B) such that the set of output commands increases a probability of the distributions of energy at a candidate current location of the object to change a candidate current orientation of the object to the target orientation; and
output the parameters of the learned function.

6. The robotic assembly (10) of claim 1, wherein the set of actuators (9) comprises one or more transducers selected from a group comprising electromagnetic linear solenoids, electromagnetic rotary solenoids, hydraulic cylinders, pneumatic cylinders, piezoelectric transducers, transducers based on impingement of a fluid on the supporting surface, and transducers based on direct impingement of a fluid on the objects and wherein, optionally, the set of actuators (9) comprise a combination of actuators of different types from the group.

7. The robotic assembly (10) of claim 1, wherein the application of the corresponding specific distribution of energy at the first current location of the object (5) at the supporting surface (7) changes the first current location to a second current location of the object (5) at the supporting surface (7), wherein the object (5) at the supporting surface (7) is in the second orientation at the second current location.

8. The robotic assembly (10) of claim 1, wherein each command of the set of control commands comprises instructions specifying one or more of a timing and a duration of an impulse force to be applied by one or more actuators (9) of the set of actuators (9) or an identifier of at least one actuator (9) of the set of actuators (9).

9. The robotic assembly (1) of claim 2, further comprising a robotic controller (11) for controlling the robotic assembly (10), the robotic controller (11) comprising:
an interface configured to communicate with a database (711A) of learned association between candidate orientations of the object to one or more control commands of a set of control commands yielding new orientations based on the learned function
a memory (703B) configured to store executable instructions;
wherein executing the learned function by the processor consists in querying the database (711A) with the current location and the first current orientation to obtain at least one control command of the set of control commands.

10. The robotic assembly (1) of claim 9, wherein
the robotic controller (11) is hosted as one or more cloud services,
the imaging system uploads the plurality of instances of pose data of the supported object (5) to the one or more cloud services, and
an impulse generator for controlling the set of actuators (9) downloads the at least one control command from the one or more cloud services.

11. A method for orienting an object (5) supported at a supporting surface (7) of the robotic assembly (1) of any one of the preceding claims, the method comprising:
i.) receiving pose data of the object (5) at the supporting surface (7);
ii.) obtaining a first current location and a first current orientation of the object (5) based on the pose data of the object (5);
iii.) executing a learned function to map the first current location and the first current orientation of the object (5) to at least one control command of a set of control commands, wherein the learned function maps a location and an orientation of the object (5) at the supporting surface to one or more commands of the set of control commands, wherein the learned function is trained in a self-supervised manner to learn a probability of an actuator (9) of a set of actuators (9) to put the object (5) into a desired pose as a function of a position and orientation of the object (5), and wherein the at least one control command defines at least one actuator (9) of the set of actuators (9) to be controlled such that a probability of the at least one actuator (9) changing the first current orientation of the object (5) to a target orientation of the object (5) is maximum;
iv.) submitting the at least one control command to the set of actuators (9) to apply a corresponding specific distribution of energy at the first current location of the object at the supporting surface to increase a likelihood of changing the first current orientation to a target orientation of the object;
repeating steps i) to iv.) iteratively until the object is oriented in the target orientation.

12. The method of claim 11, wherein the learned function is a classifier learned with one or a combination of k-nearest neighbors algorithm (k-NN), a support-vector machine (SVM), an rN (radius-neighborhood), a random forest, a relevance vector machine (RVM), a reinforcement learning (RL), or a backward propagation minimizing a loss function; and/or
wherein the learned function is a classifier learned with a radius neighbors (rN) selector of a k-nearest neighbors (k-NN) learning.

13. The method of claim 11, further comprising training the learned function during a training stage, the training stage comprising:
collecting the target orientation of the object (5) on the supporting surface (7);
submitting to the set of actuators (9) multiple sets of random control commands to apply different distributions of energy at different locations of the supporting surface (7);
detecting, using an imaging system, an orientation change of the object (5) for each of the different distributions of energy; and
training parameters of the learned function to produce the sets of control commands to the set of actuators (9) increasing the likelihood of the different distributions of energy at the current location of the object (5) to change a current orientation of the object (5) to the target orientation; and/or
further comprising training the learned function using machine learning, wherein the training of the learned function comprises:
imaging a training supporting surface (23A) of a training system;
accepting a second target orientation of the object (5) at the training supporting surface (23A);
submitting to a set of training actuators (23B) different multiple sets of training control commands to apply different distributions of energy at different locations of the training supporting surface (23A);
detecting a change of the orientation of the object (5) for each of the different distributions of energy;
training parameters of the learned function to produce a set of output commands for the set of actuators (23B) such that the set of output commands increases a probability of the distributions of energy at a candidate current location of the object (5) to change a candidate current orientation of the object (5) to the second target orientation; and
outputting the parameters of the learned function.

## Patentansprüche

1. Roboteranordnung (10), umfassend:
eine Trägerfläche (7), die eingerichtet ist, ein Objekt (5) zu tragen;
ein Abbildungssystem, das eingerichtet ist, die Trägerfläche (7) abzubilden und eine Vielzahl von Instanzen von Posendaten des Objekts an der Trägerfläche (7) zu erzeugen;
einen Satz von Aktuatoren (9), die mit der Trägerfläche (7) gekoppelt sind, wobei jeder Aktuator (9) des Satzes von Aktuatoren (9) eingerichtet ist, einen Impuls auf die Trägerfläche (7) mit einer Energie aufzubringen, die durch einen entsprechenden Steuerbefehl eines Satzes von Steuerbefehlen bestimmt wird;
einen Arbeitsspeicher (703B), der eingerichtet ist, eine gelernte Funktion zu speichern, die einen Standort und eine Ausrichtung des Objekts an der Trägerfläche auf einen oder mehrere Befehle des Satzes von Steuerbefehlen mappt, wobei die gelernte Funktion in einer selbstüberwachten Weise trainiert wird, um eine Wahrscheinlichkeit jedes Aktuators (9) des Satzes von Aktuatoren (9) zu lernen, um das Objekt (5) in eine gewünschte Pose als eine Funktion einer Position und Ausrichtung des Objekts (5) zu bringen; und
einen Prozessor (703A), der eingerichtet ist zum:
Annehmen der Vielzahl von Instanzen von Posendaten des Objekts (5) an der Trägerfläche (7);
Erhalten eines ersten aktuellen Standorts und einer ersten aktuellen Ausrichtung des Objekts (5) auf der Grundlage einer ersten Instanz der Vielzahl von Instanzen der Posendaten des Objekts (5);
Ausführen der gelernten Funktion, um den ersten aktuellen Standort und die erste aktuelle Ausrichtung des Objekts auf mindestens einen Steuerbefehl des Satzes von Steuerbefehlen zu mappen, wobei der mindestens eine Steuerbefehl mindestens einen Aktuator (9) des Satzes von Aktuatoren (9) definiert, der so zu steuern ist, dass eine Wahrscheinlichkeit, dass der mindestens eine Aktuator (9) die erste aktuelle Ausrichtung des Objekts (5) in eine Zielausrichtung des Objekts (5) ändert, maximal ist;
Übermitteln des mindestens einen Steuerbefehls an den Satz von Aktuatoren (9), um eine entsprechende spezifische Energieverteilung an dem ersten aktuellen Standort des Objekts (5) an der Trägerfläche (7) aufzubringen, um die Wahrscheinlichkeit zu erhöhen, dass die erste aktuelle Ausrichtung in die Zielausrichtung des Objekts (5) geändert wird;
Erhalten einer zweiten aktuellen Ausrichtung des Objekts (5) auf der Grundlage einer zweiten Instanz der Vielzahl von Instanzen der Posendaten des Objekts (5);
iteratives Wiederholen der vorstehenden Prozessorbefehle, bis das Objekt in der Zielausrichtung ausgerichtet ist; und
einem Robotermanipulator (17) Befehlen, das getragene Objekt (5) auf der Grundlage einer Übereinstimmung zwischen der zweiten Ausrichtung des Objekts (5) und der Zielausrichtung zu manipulieren;
wobei die Trägerfläche (7) ferner umfasst:
eine halbflexible Schicht (513), die ausgelegt ist, eine oder mehrere Impulskräfte von dem Satz von Aktuatoren (9; 509) zu dämpfen und zumindest einen Teil der gedämpften einen oder mehreren Impulskräfte auf das Objekt (5) zu übertragen;
einen Teilhaltekranz (519) auf der halbflexiblen Schicht (513), der ausgelegt ist, das Objekt (5) innerhalb der Trägerfläche (7) zu halten;
einen Satz von Rückhaltefedern (517) zwischen dem Teilhaltekranz (519) und der halbflexiblen Schicht (513); und
eine Aktuatorbefestigungsplatte (507) unterhalb der halbflexiblen Schicht (513), wobei der Satz von Aktuatoren starr auf der Aktuatorbefestigungsplatte befestigt ist.

2. Roboteranordnung (10) nach Anspruch 1, ferner umfassend den Robotermanipulator, wobei der Robotermanipulator eingerichtet ist, das Objekt (5) an einer oder mehreren Kontaktflächen zu greifen.

3. Roboteranordnung (10) nach Anspruch 1, wobei die gelernte Funktion ein Klassifikator ist, der mit einem oder einer Kombination aus einem k-Nächste-Nachbarn-Algorithmus (k-NN), einer Support-Vektor-Maschine (SVM), einem rN (radius-neighborhood), einem Random Forest, einer Relevanz-Vektor-Maschine (RVM), einem Reinforcement Learning (RL), einer Backward-Propagation, die eine Verlustfunktion minimiert, gelernt wurde; und/oder
wobei die gelernte Funktion ein Klassifikator ist, der mit einem Radius-Nachbarn (rN)-Selektor eines k-Nächste-Nachbarn (k-NN)-Lernens gelernt wurde.

4. Roboteranordnung (10) nach Anspruch 1, wobei der Prozessor ferner eingerichtet ist, die gelernte Funktion während einer Trainingsphase zu trainieren, wobei der Prozessor für die Trainingsphase eingerichtet ist zum:
Einholen der Zielausrichtung des Objekts (5) auf der Trägerfläche (7);
Übermitteln mehrerer Sätze von Zufallssteuerbefehlen an den Satz von Aktuatoren (9), um unterschiedliche Energieverteilungen an verschiedenen Standorten der Trägerfläche (7) aufzubringen;
Erfassen, unter Verwendung des Abbildungssystems, einer Ausrichtungsänderung des Objekts (5) für jede der unterschiedlichen Energieverteilungen; und
Trainieren von Parametern der gelernten Funktion, um die Sätze von Steuerbefehlen für den Satz von Aktuatoren (9) zu erzeugen, die die Wahrscheinlichkeit der unterschiedlichen Energieverteilungen am aktuellen Standort des Objekts (5) erhöhen, um eine aktuelle Ausrichtung des Objekts (5) in die Zielausrichtung zu ändern.

5. Roboteranordnung (10) nach Anspruch 1, wobei die Roboteranordnung (10) kommunikativ mit einem Trainingssystem zum Trainieren der gelernten Funktion unter Verwendung von maschinellem Lernen gekoppelt ist, wobei das Trainingssystem umfasst:
eine Trainingsträgerfläche (23A);
ein Trainingsabbildungssystem, das eingerichtet ist, die Trainingsträgerfläche (23A) abzubilden;
einen Satz von Trainingsaktuatoren (23B), wobei jeder Trainingsaktuator (23B) eingerichtet ist, einen Impuls auf die Trainingsträgerfläche (23A) mit einer Energie aufzubringen, die durch einen entsprechenden Trainingssteuerbefehl bestimmt wird, so dass ein spezifischer Satz von Trainingssteuerbefehlen, die dem Satz der Trainingsaktuatoren (23B) übermittelt werden, eine entsprechende spezifische Verteilung der auf die Trainingsträgerfläche (23A) aufgebrachten Energie bewirken;
eine Eingabeschnittstelle, die eingerichtet ist, eine Zielausrichtung des Objekts an der Trainingsträgerfläche (23A) anzunehmen;
einen Trainingsprozessor und einen Trainingsarbeitsspeicher, der darauf gespeicherte Anweisungen aufweist, die den Trainingsprozessor veranlassen, die gelernte Funktion zu trainieren, wobei der Trainingsprozessor zum Trainieren der gelernten Funktion eingerichtet ist zum:
Übermitteln verschiedener mehrerer Sätze von Trainingssteuerbefehlen an den Satz von Trainingsaktuatoren, um unterschiedliche Energieverteilungen an verschiedenen Standorten der Trainingsträgerfläche (23A) aufzubringen;
Erfassen, unter Verwendung des Trainingsabbildungssystems, einer Ausrichtungsänderung des Objekts für jede der Energieverteilungen; und
Trainieren von Parametern der gelernten Funktion, um einen Satz von Ausgabebefehlen für den Satz von Aktuatoren (23B) zu erzeugen, so dass der Satz von Ausgabebefehlen eine Wahrscheinlichkeit der Energieverteilungen an einem aktuellen Kandidatenstandort des Objekts erhöht, um eine aktuelle Kandidatenausrichtung des Objekts in die Zielausrichtung zu ändern; und
Ausgeben der Parameter der gelernten Funktion.

6. Roboteranordnung (10) nach Anspruch 1, wobei der Satz von Aktuatoren (9) einen oder mehrere Wandler umfasst, die aus einer Gruppe ausgewählt sind, die elektromagnetische Linearmagnete, elektromagnetische Drehmagnete, hydraulische Zylinder, pneumatische Zylinder, piezoelektrische Wandler, Wandler, die auf dem Aufprall eines Fluids auf die Trägerfläche basieren, und Wandler, die auf dem direkten Aufprall eines Fluids auf die Objekte basieren, umfasst und wobei, optional, der Satz von Aktuatoren (9) eine Kombination von Aktuatoren verschiedener Typen aus der Gruppe umfasst.

7. Roboteranordnung (10) nach Anspruch 1, wobei das Aufbringen der entsprechenden spezifischen Energieverteilung an dem ersten aktuellen Standort des Objekts (5) an der Trägerfläche (7) den ersten aktuellen Standort in einen zweiten aktuellen Standort des Objekts (5) an der Trägerfläche (7) ändert, wobei sich das Objekt (5) an der Trägerfläche (7) an dem zweiten aktuellen Standort in der zweiten Ausrichtung befindet.

8. Roboteranordnung (10) nach Anspruch 1, wobei jeder Befehl des Satzes von Steuerbefehlen Anweisungen umfasst, die einen oder mehrere eines Zeitpunktes und einer Dauer einer Impulskraft, die von einem oder mehreren Aktuatoren (9) des Satzes von Aktuatoren (9) aufgebracht werden soll, oder einer Kennung von mindestens einem Aktuator (9) des Satzes von Aktuatoren (9) angeben.

9. Roboteranordnung (1) nach Anspruch 2, ferner umfassend eine Robotersteuerung (11) zur Steuerung der Roboteranordnung (10), wobei die Robotersteuerung (11) umfasst:
eine Schnittstelle, die eingerichtet ist, mit einer Datenbank (711 A) gelernter Assoziationen zwischen Kandidatenausrichtungen des Objekts zu einem oder mehreren Steuerbefehlen eines Satzes von Steuerbefehlen zu kommunizieren, die neue Ausrichtungen auf der Grundlage der gelernten Funktion ergeben
einen Arbeitsspeicher (703B), der eingerichtet ist, ausführbare Anweisungen zu speichern;
wobei das Ausführen der gelernten Funktion durch den Prozessor darin besteht, die Datenbank (711 A) mit dem aktuellen Standort und der ersten aktuellen Ausrichtung abzufragen, um mindestens einen Steuerbefehl aus dem Satz von Steuerbefehlen zu erhalten.

10. Roboteranordnung (1) nach Anspruch 9, wobei
die Robotersteuerung (11) als ein oder mehrere Cloud-Dienste gehostet wird,
das Abbildungssystem die Vielzahl von Instanzen von Posendaten des getragenen Objekts (5) zu dem einen oder mehreren Cloud-Diensten hochlädt, und
ein Impulsgenerator zur Steuerung des Satzes von Aktuatoren (9) den mindestens einen Steuerbefehl von dem einen oder den mehreren Cloud-Diensten herunterlädt.

11. Verfahren zum Ausrichten eines Objekts (5), das an einer Trägerfläche (7) der Roboteranordnung (1) nach einem der vorhergehenden Ansprüche getragen wird, wobei das Verfahren umfasst:
i.) Empfangen von Posendaten des Objekts (5) an der Trägerfläche (7);
ii.) Erhalten eines ersten aktuellen Standorts und einer ersten aktuellen Ausrichtung des Objekts (5) auf der Grundlage der Posendaten des Objekts (5);
iii.) Ausführen einer gelernten Funktion zum Mappen des ersten aktuellen Standorts und der ersten aktuellen Ausrichtung des Objekts (5) zu mindestens einem Steuerbefehl aus einem Satz von Steuerbefehlen, wobei die gelernte Funktion einen Standort und eine Ausrichtung des Objekts (5) an der Trägerfläche auf einen oder mehrere Befehle des Satzes von Steuerbefehlen mappt, wobei die gelernte Funktion in einer selbstüberwachten Weise trainiert wird, um eine Wahrscheinlichkeit eines Aktuators (9) eines Satzes von Aktuatoren (9) zu lernen, um das Objekt (5) in eine gewünschte Pose als eine Funktion einer Position und Ausrichtung des Objekts (5) zu bringen, und wobei der mindestens eine Steuerbefehl mindestens einen Aktuator (9) des Satzes von Aktuatoren (9) definiert, der so zu steuern ist, dass eine Wahrscheinlichkeit, dass der mindestens eine Aktuator (9) die erste aktuelle Ausrichtung des Objekts (5) in eine Zielausrichtung des Objekts (5) ändert, maximal ist;
iv.) Übermitteln des mindestens einen Steuerbefehls an den Satz von Aktuatoren (9), um eine entsprechende spezifische Energieverteilung an dem ersten aktuellen Standort des Objekts an der Trägerfläche aufzubringen, um die Wahrscheinlichkeit zu erhöhen, dass die erste aktuelle Ausrichtung in die Zielausrichtung des Objekts geändert wird;
iteratives Wiederholen von Schritten i) bis iv), bis das Objekt in der Zielausrichtung ausgerichtet ist.

12. Verfahren nach Anspruch 11, wobei die gelernte Funktion ein Klassifikator ist, der mit einem oder einer Kombination aus einem k-Nächste-Nachbarn-Algorithmus (k-NN), einer Support-Vektor-Maschine (SVM), einem rN (radius-neighborhood), einem Random Forest, einer Relevanz-Vektor-Maschine (RVM), einem Reinforcement Learning (RL), oder einer Backward-Propagation, die eine Verlustfunktion minimiert, gelernt wird; und/oder
wobei die gelernte Funktion ein Klassifikator ist, der mit einem Radius-Nachbarn (rN)-Selektor eines k-Nächste-Nachbarn (k-NN)-Lernens gelernt wurde.

13. Verfahren nach Anspruch 11, ferner umfassend das Trainieren der gelernten Funktion während einer Trainingsphase, wobei die Trainingsphase umfasst:
Einholen der Zielausrichtung des Objekts (5) auf der Trägerfläche (7);
Übermitteln mehrerer Sätze von Zufallssteuerbefehlen an den Satz von Aktuatoren (9), um unterschiedliche Energieverteilungen an verschiedenen Standorten der Trägerfläche (7) aufzubringen;
Erfassen, unter Verwendung eines Abbildungssystems, einer Ausrichtungsänderung des Objekts (5) für jede der unterschiedlichen Energieverteilungen; und
Trainieren von Parametern der gelernten Funktion, um die Sätze von Steuerbefehlen für den Satz von Aktuatoren (9) zu erzeugen, die die Wahrscheinlichkeit der unterschiedlichen Energieverteilungen am aktuellen Standort des Objekts (5) erhöhen, um eine aktuelle Ausrichtung des Objekts (5) in die Zielausrichtung zu ändern; und/oder
ferner umfassend das Trainieren der gelernten Funktion unter Verwendung von maschinellem Lernen, wobei das Training der gelernten Funktion umfasst:
Abbilden einer Trainingsträgerfläche (23A) eines Trainingssystems;
Annehmen einer zweiten Zielausrichtung des Objekts (5) an der Trainingsträgerfläche (23A);
Übermitteln verschiedener mehrerer Sätze von Trainingssteuerbefehlen an einen Satz von Trainingsaktuatoren (23B), um unterschiedliche Energieverteilungen an verschiedenen Standorten der Trainingsträgerfläche (23A) aufzubringen;
Erfassen einer Ausrichtungsänderung des Objekts (5) für jede der unterschiedlichen Energieverteilungen;
Trainieren von Parametern der gelernten Funktion, um einen Satz von Ausgabebefehlen für den Satz von Aktuatoren (23B) zu erzeugen, so dass der Satz von Ausgabebefehlen eine Wahrscheinlichkeit der Energieverteilungen an einem aktuellen Kandidatenstandort des Objekts (5) erhöht, um eine aktuelle Kandidatenausrichtung des Objekts (5) in die zweite Zielausrichtung zu ändern; und
Ausgeben der Parameter der gelernten Funktion.

## Revendications

1. Ensemble robotique (10), comprenant :
une surface de support (7) configurée pour supporter un objet (5) ;
un système d'imagerie configuré pour imager la surface de support (7) et générer une pluralité d'instances de données de pose de l'objet au niveau de la surface de support (7) ;
un ensemble d'actionneurs (9) couplé à la surface de support (7), dans lequel chaque actionneur (9) de l'ensemble d'actionneurs (9) est configuré pour appliquer une impulsion à la surface de support (7) avec une énergie gérée par une instruction de commande correspondante d'un ensemble d'instructions de commande ;
une mémoire (703B) configurée pour stocker une fonction apprise qui cartographie un emplacement et une orientation de l'objet au niveau de la surface de support par rapport à une ou plusieurs instructions de l'ensemble d'instructions de commande, dans lequel la fonction apprise est entraînée d'une manière auto-surveillée pour apprendre une probabilité de chaque actionneur (9) de l'ensemble d'actionneurs (9) de mettre l'objet (5) dans une pose souhaitée en fonction d'une position et d'une orientation de l'objet (5) ; et
un processeur (703A) configuré pour :
accepter la pluralité d'instances de données de pose de l'objet (5) au niveau de la surface de support (7) ;
obtenir un premier emplacement actuel et une première orientation actuelle de l'objet (5) sur la base d'une première instance de la pluralité d'instances des données de pose de l'objet (5) ;
exécuter la fonction apprise pour cartographier le premier emplacement actuel et la première orientation actuelle de l'objet par rapport à au moins une instruction de commande de l'ensemble d'instructions de commande, dans lequel la au moins une instruction de commande définit au moins un actionneur (9) de l'ensemble d'actionneurs (9) à commander de telle sorte qu'une probabilité du au moins un actionneur (9) de changer la première orientation actuelle de l'objet (5) vers une orientation cible de l'objet (5) soit maximale ;
soumettre la au moins une instruction de commande à l'ensemble d'actionneurs (9) pour appliquer une distribution d'énergie spécifique correspondante au premier emplacement actuel de l'objet (5) au niveau de la surface de support (7) pour augmenter une probabilité de changer la première orientation actuelle pour l'orientation cible de l'objet (5) ;
obtenir une seconde orientation actuelle de l'objet (5) sur la base d'une seconde instance de la pluralité d'instances des données de pose de l'objet (5) ;
répéter de manière itérative les instructions de processeur ci-dessus jusqu'à ce que l'objet soit orienté dans l'orientation cible ; et
ordonner à un manipulateur robotique (17) de manipuler l'objet supporté (5) sur la base d'une correspondance entre la seconde orientation de l'objet (5) et l'orientation cible ;
dans lequel la surface de support (7) comprend en outre :
une couche semi-flexible (513) adaptée pour amortir une ou plusieurs forces d'impulsion de l'ensemble d'actionneurs (9 ; 509) et transmettre au moins certaines des une ou plusieurs forces d'impulsion amorties à l'objet (5) ;
un enclos de retenue de pièce (519) sur la couche semi flexible (513) adaptée pour retenir l'objet (5) à l'intérieur de la surface de support (7) ;
un ensemble de ressorts de retenue (517) entre l'enclos de retenue de pièce (519) et la couche semi-flexible (513) ; et
une plaque de montage d'actionneurs (507) sous la couche semi-flexible (513), dans lequel l'ensemble d'actionneurs sont montés de manière rigide sur la plaque de montage d'actionneurs.

2. Ensemble robotique (10) selon la revendication 1, comprenant en outre le manipulateur robotique, dans lequel le manipulateur robotique est configuré pour saisir l'objet (5) au niveau d'une ou plusieurs surfaces de contact.

3. Ensemble robotique (10) selon la revendication 1, dans lequel la fonction apprise est un classificateur appris avec un ou une combinaison d'un algorithme de k voisins les plus proches (k-NN), d'une machine à vecteur de support (SVM), d'un rN (voisinage de rayon), d'une forêt aléatoire, d'une machine à vecteur de pertinence (RVM), d'un apprentissage de renforcement (RL), d'une propagation en arrière minimisant une fonction de perte ; et/ou
dans lequel la fonction apprise est un classificateur appris avec un sélecteur de voisins de rayon (rN) d'un apprentissage de k voisins les plus proches (k-NN).

4. Ensemble robotique (10) selon la revendication 1, dans lequel le processeur est en outre configuré pour entraîner la fonction apprise pendant une phase d'entraînement, dans lequel pour la phase d'entraînement, le processeur est configuré pour :
recueillir l'orientation cible de l'objet (5) sur la surface de support (7) ;
soumettre à l'ensemble d'actionneurs (9) de multiples ensembles d'instructions de commande aléatoires pour appliquer différentes distributions d'énergie au niveau de différents emplacements de la surface de support (7) ;
détecter, en utilisant le système d'imagerie, un changement d'orientation de l'objet (5) pour chacune des différentes distributions d'énergie ; et
entraîner des paramètres de la fonction apprise pour produire les ensembles d'instructions de commande à l'ensemble d'actionneurs (9) en augmentant la probabilité des différentes distributions d'énergie au niveau de l'emplacement actuel de l'objet (5) de changer une orientation actuelle de l'objet (5) vers l'orientation cible.

5. Ensemble robotique (10) selon la revendication 1, dans lequel l'ensemble robotique (10) est couplé en communication avec un système d'entraînement pour entraîner la fonction apprise en utilisant un apprentissage automatique, dans lequel le système d'entraînement comprend :
une surface de support d'entraînement (23A) ;
un système d'imagerie d'entraînement configuré pour imager la surface de support d'entraînement (23A) ;
un ensemble d'actionneurs d'entraînement (23B), chaque actionneur d'entraînement (23B) étant configuré pour appliquer une impulsion à la surface de support d'entraînement (23A) avec une énergie gérée par une instruction de commande d'entraînement correspondante, de sorte qu'un ensemble spécifique d'instructions de commande d'entraînement soumis à l'ensemble des actionneurs d'entraînement (23B) provoque une distribution spécifique correspondante d'énergie appliquée à la surface de support d'entraînement (23A) ;
une interface d'entrée configurée pour accepter une orientation cible de l'objet au niveau de la surface de support d'entraînement (23A) ;
un processeur d'entraînement et une mémoire d'entraînement stockant en son sein des instructions qui amènent le processeur d'entraînement à entraîner la fonction apprise, dans lequel, pour entraîner la fonction apprise, le processeur d'entraînement est configuré pour :
soumettre à l'ensemble d'actionneurs d'entraînement différents ensembles multiples d'instructions de commande d'entraînement pour appliquer différentes distributions d'énergie au niveau de différents emplacements de la surface de support d'entraînement (23A) ;
détecter, en utilisant le système d'imagerie d'entraînement, un changement de l'orientation de l'objet pour chacune des distributions d'énergie ; et
entraîner des paramètres de la fonction apprise pour produire un ensemble d'instructions de sortie pour l'ensemble d'actionneurs (23B) de telle sorte que l'ensemble d'instructions de sortie augmente une probabilité des distributions d'énergie au niveau d'un emplacement actuel candidat de l'objet de changer une orientation actuelle candidate de l'objet vers l'orientation cible ; et
délivrer en sortie les paramètres de la fonction apprise.

6. Ensemble robotique (10) selon la revendication 1, dans lequel l'ensemble d'actionneurs (9) comprend un ou plusieurs transducteurs choisis dans un groupe comprenant des solénoïdes linéaires électromagnétiques, des solénoïdes rotatifs électromagnétiques, des cylindres hydrauliques, des cylindres pneumatiques, des transducteurs piézoélectriques, des transducteurs basés sur l'impact d'un fluide sur la surface de support, et des transducteurs basés sur l'impact direct d'un fluide sur les objets et dans lequel, facultativement, l'ensemble d'actionneurs (9) comprend une combinaison d'actionneurs de différents types du groupe.

7. Ensemble robotique (10) selon la revendication 1, dans lequel l'application de la distribution spécifique correspondante d'énergie au premier emplacement actuel de l'objet (5) au niveau de la surface de support (7) change le premier emplacement actuel en un second emplacement actuel de l'objet (5) au niveau de la surface de support (7), dans lequel l'objet (5) au niveau de la surface de support (7) est dans la seconde orientation au niveau du second emplacement actuel.

8. Ensemble robotique (10) selon la revendication 1, dans lequel chaque instruction de l'ensemble d'instructions de commande comprend des directives spécifiant une ou plusieurs parmi une synchronisation et une durée d'une force d'impulsion à appliquer par l'intermédiaire d'un ou plusieurs actionneurs (9) de l'ensemble d'actionneurs (9) ou un identifiant d'au moins un actionneur (9) de l'ensemble d'actionneurs (9).

9. Ensemble robotique (1) selon la revendication 2, comprenant en outre un dispositif de commande robotique (11) pour commander l'ensemble robotique (10), le dispositif de commande robotique (11) comprenant :
une interface configurée pour communiquer avec une base de données (711A) d'association apprise entre des orientations candidates de l'objet par rapport à une ou plusieurs instructions de commande d'un ensemble d'instructions de commande donnant de nouvelles orientations basées sur la fonction apprise
une mémoire (703B) configurée pour stocker des directives exécutables ;
dans lequel l'exécution de la fonction apprise par le processeur consiste à interroger la base de données (711A) avec l'emplacement actuel et la première orientation actuelle pour obtenir au moins une instruction de commande de l'ensemble d'instructions de commande.

10. Ensemble robotique (1) selon la revendication 9, dans lequel
le dispositif de commande robotique (11) est hébergé sous la forme d'un ou plusieurs services en nuage,
le système d'imagerie télécharge la pluralité d'instances de données de pose de l'objet supporté (5) vers les un ou plusieurs services en nuage, et
un générateur d'impulsions pour commander l'ensemble d'actionneurs (9) télécharge la au moins une instruction de commande à partir des un ou plusieurs services en nuage.

11. Procédé pour orienter un objet (5) supporté au niveau d'une surface de support (7) de l'ensemble robotique (1) selon l'une quelconque des revendications précédentes, le procédé comprenant les étapes consistant à :
i.) recevoir des données de pose de l'objet (5) au niveau de la surface de support (7) ;
ii.) obtenir un premier emplacement actuel et une première orientation actuelle de l'objet (5) sur la base des données de pose de l'objet (5) ;
iii.) exécuter une fonction apprise pour cartographier le premier emplacement actuel et la première orientation actuelle de l'objet (5) par rapport à au moins une instruction de commande d'un ensemble d'instructions de commande, dans lequel la fonction apprise cartographie un emplacement et une orientation de l'objet (5) au niveau de la surface de support par rapport à une ou plusieurs instructions de l'ensemble d'instructions de commande, dans lequel la fonction apprise est entraînée d'une manière auto-surveillée pour apprendre une probabilité d'un actionneur (9) d'un ensemble d'actionneurs (9) de mettre l'objet (5) dans une pose souhaitée en fonction d'une position et d'une orientation de l'objet (5), et dans lequel la au moins une instruction de commande définit au moins un actionneur (9) de l'ensemble d'actionneurs (9) à commander de telle sorte qu'une probabilité du au moins un actionneur (9) changeant la première orientation actuelle de l'objet (5) vers une orientation cible de l'objet (5) soit maximale ;
iv.) soumettre la au moins une instruction de commande à l'ensemble d'actionneurs (9) pour appliquer une distribution d'énergie spécifique correspondante au premier emplacement actuel de l'objet au niveau de la surface de support pour augmenter une probabilité de changer la première orientation actuelle pour une orientation cible de l'objet ;
répéter les étapes i) à iv) de manière itérative jusqu'à ce que l'objet soit orienté dans l'orientation cible.

12. Procédé selon la revendication 11, dans lequel la fonction apprise est un classificateur appris avec un ou une combinaison d'un algorithme de k voisins les plus proches (k-NN), d'une machine à vecteur de support (SVM), d'un rN (voisinage de rayon), d'une forêt aléatoire, d'une machine à vecteur de pertinence (RVM), d'un apprentissage de renforcement (RL), d'une propagation en arrière minimisant une fonction de perte ; et/ou
dans lequel la fonction apprise est un classificateur appris avec un sélecteur de voisins de rayon (rN) d'un apprentissage de k voisins les plus proches (k-NN).

13. Procédé selon la revendication 11, comprenant en outre un entraînement de la fonction apprise pendant une phase d'entraînement, la phase d'entraînement comprenant les étapes consistant à :
recueillir l'orientation cible de l'objet (5) sur la surface de support (7) ;
soumettre à l'ensemble d'actionneurs (9) de multiples ensembles d'instructions de commande aléatoires pour appliquer différentes distributions d'énergie au niveau de différents emplacements de la surface de support (7) ;
détecter, en utilisant un système d'imagerie, un changement d'orientation de l'objet (5) pour chacune des différentes distributions d'énergie ; et
entraîner des paramètres de la fonction apprise pour produire les ensembles d'instructions de commande à l'ensemble d'actionneurs (9) en augmentant la probabilité des différentes distributions d'énergie à l'emplacement actuel de l'objet (5) de changer une orientation actuelle de l'objet (5) à l'orientation cible ; et/ou
comprenant en outre un entraînement de la fonction apprise en utilisant un apprentissage automatique, dans lequel l'entraînement de la fonction apprise comprend les étapes consistant à :
imager une surface de support d'entraînement (23A) d'un système d'entraînement ;
accepter une seconde orientation cible de l'objet (5) au niveau de la surface de support d'entraînement (23A) ;
soumettre à un ensemble d'actionneurs d'entraînement (23B) différents ensembles multiples d'instructions de commande d'entraînement pour appliquer différentes distributions d'énergie au niveau de différents emplacements de la surface de support d'entraînement (23A) ;
détecter un changement de l'orientation de l'objet (5) pour chacune des différentes distributions d'énergie ;
entraîner des paramètres de la fonction apprise pour produire un ensemble d'instructions de sortie pour l'ensemble d'actionneurs (23B) de telle sorte que l'ensemble d'instructions de sortie augmente une probabilité des distributions d'énergie au niveau d'un emplacement actuel candidat de l'objet (5) de changer une orientation actuelle candidate de l'objet (5) vers la seconde orientation cible ; et
délivrer en sortie les paramètres de la fonction apprise.
